# EUROPÄISCHE PATENTSCHRIFT

(11) **EP 3 173 838 B1**
(45) Veröffentlichungstag und Bekanntmachung des Hinweises auf die Patenterteilung: **18.05.2022**
(21) Anmeldenummer: 16193117.5
(22) Anmeldetag: 17.09.2010
(51) Int. Cl.: G02B 21/06, G02B 21/00, G02B 21/24, G02B 21/02

(54) **MIKROSKOP MIT EINEM LICHTBLATT**
MICROSCOPE WITH A LIGHT SHEET
MICROSCOPE À FEUILLE DE LUMIÈRE

(30) Priorität: 24.09.2009 DE 102009044983
(43) Veröffentlichungstag der Anmeldung: 31.05.2017
(62) Teilanmeldung aus: 10754926.3
(73) Patentinhaber: Carl Zeiss Microscopy GmbH, 07745 Jena (DE)
(72) Erfinder: HAUSCHILD, Robert, 1090 Wien (AT); LIPPERT, Helmut, 07745 Jena (DE); POWER, Christopher, SK8 6AR Cheadle Hulme (GB); WALD, Matthias, 07751 Jena (DE)
(74) Vertreter: Gleim Petri Oehmke Patent- und Rechtsanwaltspartnerschaft mbB

(56) Entgegenhaltungen:
- WO-A1-98/28646
- DE-A1-102007 015 063
- HUISKEN J ET AL: "Even fluorescence excitation by multidirectional selective plane illumination microscopy (mSPIM)", OPTICS LETTERS, OSA, OPTICAL SOCIETY OF AMERICA, WASHINGTON, DC, US, Bd. 32, Nr. 17, 1. September 2007 (2007-09-01), Seiten 2608-2610, XP002508397, ISSN: 0146-9592, DOI: DOI:10.1364/OL.32.002608 [gefunden am 2007-08-27]
- KELLER P J ET AL: "Quantitative in vivo imaging of entire embryos with Digital Scanned Laser Light Sheet Fluorescence Microscopy", CURRENT OPINION IN NEUROBIOLOGY, LONDON, GB, Bd. 18, Nr. 6, 1. Dezember 2008 (2008-12-01), Seiten 624-632, XP026104064, ISSN: 0959-4388, DOI: 10.1016/J.CONB.2009.03.008 [gefunden am 2009-04-15]
- GREGER K ET AL: "Basic building units and properties of a fluorescence single plane illumination microscope", REVIEW OF SCIENTIFIC INSTRUMENTS, AIP, MELVILLE, NY, US, Bd. 78, Nr. 2, 28. Februar 2007 (2007-02-28), Seiten 23705-23705, XP012103772, ISSN: 0034-6748, DOI: 10.1063/1.2428277

## Beschreibung

### Gebiet der Erfindung

Die Erfindung betrifft ein Mikroskop, welches eines Beleuchtungseinrichtung umfaßt, mit der ein Lichtblatt zur Beleuchtung eines Probenbereichs erzeugt wird, welches in Richtung einer Beleuchtungsachse X eines Beleuchtungsstrahlenganges und in Richtung einer Querachse Y, welche quer zu Beleuchtungsachse X liegt, annähernd flächig ausgedehnt ist. Das Mikroskop umfaßt außerdem eine Detektierungseinrichtung, mit der Licht detektiert wird, welches entlang einer Detektierungsachse Z eines Detektierungsstrahlengangs aus dem Probenbereich abgestrahlt wird, wobei Beleuchtungsachse X und Detektierungsachse Z sowie Querachse Y und Detektierungsachse Z in einem von Null verschiedenen Winkel aufeinander stehen. Vorzugsweise stehen die jeweiligen Achsen annähernd senkrecht aufeinander.

### Stand der Technik

Solch ein Mikroskopaufbau fällt in die Kategorie der sogenannten SPIM-Mikroskope (SPIM - *Selective Plane Illumination Microscopy*). Im Unterschied zur konfokalen Laser-Scanning-Mikroskopie (LSM), bei der eine dreidimensionale Probe in einzelnen, unterschiedlich tiefen Ebenen Punkt für Punkt abgetastet wird und die dabei gewonnenen Bildinformationen nachfolgend zu einer dreidimensionalen Abbildung der Probe zusammengesetzt werden, beruht die SPIM-Technologie auf der Weitfeld-Mikroskopie und ermöglicht die bildliche Darstellung der Probe auf der Grundlage von optischen Schnitten durch einzelne Ebenen der Probe.

Die Vorteile der SPIM-Technologie bestehen u.a. in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Prinzipiell werden bei der SPIM-Technologie Fluorophore, die an sich in der Probe enthalten sind oder zur Kontrastierung in die Probe eingebracht wurden, mit Laserlicht angeregt, wobei die Laserstrahlung zu einem sogenannten Lichtblatt geformt wird. Mit dem Lichtblatt wird jeweils eine ausgewählte Ebene in der Tiefe der Probe im Probenbereich beleuchtet und mit einer Abbildungsoptik ein Bild dieser Probeebene in Form eines optischen Schnittes gewonnen.

Erste moderne Ansätze zur SPIM-Technologie werden von A.H. Voie et al., Journal of Microscopy, Vol.170 (3), S.229-236, 1993 beschrieben. Hier werden die Grundzüge der modernen SPIM-Technologie aufgezeigt, bei der mit einer kohärenten Lichtquelle eine Probe beleuchtet wird, wobei das Lichtblatt unter Zuhilfenahme einer Zylinderlinse erzeugt wird. Senkrecht zur Ausbreitungsrichtung des Lichtblattes, welches allerdings eine endliche Dicke aufweist, sind Detektierungsmittel angeordnet, die eine Abbildungsoptik sowie eine Kamera umfassen.

In den letzten Jahren wurde die Technologie insbesondere im Hinblick auf ihre Anwendung in der Fluoreszenz-Mikroskopie weiterentwickelt. In der DE 102 57 423 A1 und der darauf aufbauenden WO2004/053558A1 beispielsweise werden Verfahren beschrieben, bei denen eine lichtblattartige Beleuchtung aufgrund einer Relativbewegung zwischen einem linienförmigen Lichtfeld und der zu beobachtenden Probe erzeugt wird. Die lichtblattartige Beleuchtung entsteht, indem das Lichtfeld aufgrund der Relativbewegung zeitlich aufeinander folgend mehrfach aneinander gereiht wird. Hierbei werden jedoch Schatten innerhalb der zu untersuchenden Ebene der Probe, bedingt durch in der Beleuchtungsrichtung liegende, für das Beleuchtungslicht nicht transparente Teile der Probensatz gebildet. Ähnliche Aufbauten werden auch von Stelzer et al., Science (305) S.1007-1009 (2004), und Reynaud et al., HFSP Journal 2, S.266 (2008) beschrieben.

Statt eines rein statischen Lichtblattes, zu dessen Erzeugung eine Zylinderoptik verwendet wird, kann auch ein quasistatisches Lichtblatt erzeugt werden, indem ein rotationssymmetrischer Lichtstrahl schnell über die Probe gescannt wird. Dabei wird die Integrationszeit der Kamera, auf die die Probe abgebildet wird, so gewählt, daß die Abtastung innerhalb der Integrationszeit abgeschlossen wird. Solche Aufbauten werden beispielsweise von Keller et al., Science (322), S. 1765 (2008) und Keller et al., Current Opinion in Neurobiology 18, S.1-9 (2009), sowie KELLER P J ET AL: "Quantitative in vivo imaging of entire embryos with Digital Scanned Laser Light Sheet Fluorescence Microscopy", CURRENT OPINION IN NEUROBIOLOGY, LONDON, GB, Bd. 18, Nr. 6, 1. Dezember 2008, Seiten 624-632, XP026104064,ISSN: 0959-4388, DOI: 10.1016/J.CONB.2009.03.008ViewerXP beschrieben.

Die im Stand der Technik bekannten Aufbauten und Verfahren weisen jedoch sämtlich mehr oder weniger schwerwiegende Nachteile auf, die einen Einsatz der SPIM-Technologie im kommerziellen Bereich, in dem es u.a. darauf ankommt, eine hohe Bedienerfreundlichkeit der Mikroskope zu erreichen und indem in der Regel ein hoher Durchsatz erforderlich ist - eine Vielzahl von Proben muß in relativ kurzer Zeit untersucht werden - einschränkt. Wesentliche Nachteile werden im Folgenden beschrieben.

In den meisten bisher realisierten Aufbauten, die sich der SPIM-Technologie bedienen, beispielsweise auch in der DE 102 57 423 A1 und der WO2004/053558A1, gestaltet sich schon die Variation der Bildfeldgröße für die Detektierung - beispielsweise das Umschalten von einer Bildfeldgröße, die einen guten Überblick über die Probe bietet auf einen Detailbereich - sehr aufwendig. Sie kann nur durch einen Wechsel des Detektierungsobjektivs realisiert werden. Dabei wird nachteilig der Probenraum beeinflußt, was sich insbesondere bei einem horizontalen Detektierungsstrahlengang negativ auswirken kann. Im schlimmsten Fall beinhaltet dies auch die Herausnahme und Entleerung der Probenkammer. Anschließend ist in der Regel eine Neufokussierung notwendig. Zudem wird die Probe unnötig erwärmt bzw. gekühlt.

Eine Verbesserung wird von Becker et al., Journal of Biophotonics 1 (1), S.36-42 (2008) beschrieben. Hier ist der Detektierungsstrahlengang vertikal angeordnet, so daß ein Wechsel in der Bildfeldgröße ohne wesentliche Interaktion mit dem Probenkammerraum erfolgen kann. Das Detektierungsobjektiv kann in einfacher Weise von oben in die Probenkammer eingebracht und aus dieser herausgeführt werden. Dennoch sind geringfügige Wechselwirkungen mit der Probenkammer und damit indirekt auch mit der Probe nicht zu vermeiden.

Noch einfacher gestaltet sich die Anpassung der Bildfeldgröße bei der Verwendung von Zoom- Detektierungsobjektiven. Ein solcher Aufbau wird beispielsweise von Santi et al., Biotechnics 46, S.287-294 (2009) beschrieben. Hier wird zur Detektierung ein kommerzielles Mikroskop, das Olympus MVX10, welches über ein Zoomobjektiv verfügt, verwendet. Auch dieses wird von oben in die Probenkammer eingeführt, so daß es auch hier zu geringfügigen Wechselwirkungen mit der Probenkammer kommt - das Objektiv wird in der Regel in die mit einer Immersionsflüssigkeit gefüllte Probenkammer eingeführt - wenn die Zoomfunktion des Objektivs arbeitet oder wenn der Fokus verstellt wird, allein aufgrund der motorischen Verstellung der Linsen, die sich über Schwingungen auf die Flüssigkeit in der Probenkammer übertragen können.

Bei einer Änderung der Bildfeldgröße für die Detektierung ist auch eine beleuchtungsseitige Bildfeldanpassung, d.h. eine Anpassung der Ausdehnung des Lichtblattes entlang der Querachse Y und der Detektierungsachse Z wünschenswert. Diese wird im Stand der Technik bisher durch die Verwendung auswechselbarer Blenden und / oder Strahlaufweiter (*beam expander*) realisiert, wie beispielsweise von Keller et al., Science 322, S.176 ff. (2008) und von Huisken et al., Optics Letters 32 (17), S.2608-2610 (2007) beschrieben wird. Durch das dabei auftretende Überstrahlen der Blenden kommt es zum einen zu Lichtverlusten, zum anderen ist bei der Verwendung von Strahlaufweitern die Flexibilität vermindert, da diese aufwendig ausgetauscht werden müssen.

Während klassisch, wie beispielsweise in der WO2004/053558A1 beschrieben, das Lichtblatt über im Strahlengang angeordnete Zylinderlinsen erzeugt wird, sind im Stand der Technik, wie beispielsweise im eben schon genannten Artikel von Keller et al., Science 322, S.176 ff. (2008), Aufbauten beschrieben, bei denen kein statisches Lichtblatt mehr erzeugt wird, sondern nur ein quasistatisches Lichtblatt, in dem ein rotationssymmetrischer Lichtstrahl schnell die Probe abtastet. Schnell bedeutet dabei, daß die Integrationszeit des in der Regel verwendeten ortsauflösenden Flächendetektors, beispielsweise einer Kamera mit CCD-Chip oder CMOS-Chip, so gewählt wird, daß der Lichtstrahl den Probenbereich, der dem quasistatischen Lichtblatt entspricht, innerhalb dieser Integrationszeit abtastet. Die Integrationszeit - die bei der Kamera beispielsweise der Öffnungszeit des Verschlusses entspricht - und die Abtastfrequenz bzw. Abtastzeit des Lichtstrahls können dabei in der Regel auch unabhängig voneinander eingestellt werden, so daß die Abtastzeit an eine feste Integrationszeit angepaßt werden kann. Da effektiv mit dem Abtasten durch einen rotationssymmetrischen Lichtstrahl auch ein Lichtblatt erzeugt wird, zumindest in seiner Wirkung, wird diese Herangehensweise auch unter der Erzeugung eines Lichtblattes subsumiert.

Beide Arten der Lichtblatterzeugung bieten Vorteile und Nachteile. So ist beispielsweise bei der Verwendung von Zylinderlinsen die Probenbelastung geringer, da die Intensität, mit der die Probe bestrahlt wird, geringer gewählt werden kann, um trotzdem die gleiche Dosis wie im Falle der Abtastung zu erreichen. Zudem eignet sich eine Verwendung von Zylinderlinsen gut für die Aufnahme von Bildfolgen schnell nacheinander innerhalb kürzester Zeiten, da die Geschwindigkeit nicht durch bewegliche Elemente im Beleuchtungsstrahlengang eingeschränkt wird. Insbesondere kann mittels der Verwendung von Zylinderlinsen eine stroboskopartige Beleuchtung sehr gut realisiert werden kann. Bei der Abtastung kann der in der Regel dazu verwendete, schwenkbare Abtastspiegel das geschwindigkeitslimitierende Element darstellen. Kombiniert man die reine Abtastung zusätzlich noch mit einer Winkelabtastung, d.h. einer Beleuchtung aus verschiedenen Winkeln, um Streifenartefakte zu reduzieren, wie beispielsweise in der DE 10 2007 015 063 A1 beschrieben, so besteht die Gefahr, daß Schwebungsartefakte erzeugt werden, wenn die Scanner für die Lichtblattwinkel- und die Ortsabtastung nicht aufeinander abgestimmt, nicht synchronisiert sind.

Vorteile der abtastenden Lichtblatterzeugung liegen u.a. darin, daß eine homogenere Ausleuchtung der Probe möglich wird, so daß auch quantitative Bildauswertungen möglich sind.

Dies läßt sich bei der Verwendung einer Zylinderoptik nur näherungsweise erreichen, indem eine Blende überstrahlt wird, was Lichtverluste mit sich bringt. Außerdem kann durch eine flexible Wahl der maximalen Auslenkung des Abtastmittels, des Scanners, das Bild in seiner Größe sehr flexibel angepaßt werden. Durch die Abtastung wird die räumliche Kohärenz des Anregungslichts vermindert, was außerdem zu einer Verminderung der Streifenartefakte führt. Schließlich können auch durch spezielle Modulationen der Lichtquelle, beispielsweise mit einem AOTF, Gitterstrukturen in die Probe hineinprojiziert werden.

Im Stand der Technik sind außerdem Aufbauten beschrieben, bei denen die Proben von beiden Seiten entlang der Beleuchtungsachse X aus entgegengesetzten Richtungen beleuchtet wird. In dem von Santi et al., Biotechnics 46, S.287-294 (2009), beschriebenen Aufbau wird die Probe von beiden Seiten simultan beleuchtet. Für viele Arten von Proben, wie beispielsweise Embryos der Fruchtfliege (Drosophila) ist ein solcher Aufbau nicht vorteilhaft, da auf diese Weise streuende und nicht streuende Bildanteile ungünstig miteinander kombiniert werden. Von Huisken et al., Optics Letters 32(17), S. 2608-2610 (2007) und Becker et al., Journal of Biophotonics 1 (1), S. 36-42 (2008) werden Aufbauten beschrieben, die die Probe sequentiell, d.h. entlang der Beleuchtungsachse X alternierend aus beiden Richtungen beleuchten, was für die oben erwähnte Probe günstiger ist. Zum Hin- und Herschalten zwischen den beiden Beleuchtungsrichtungen wird ein vibrationserzeugender Shutter bzw. ein Drehspiegel verwendet, so daß die für die Umschaltung benötigten Zeiten relativ lang sind.

Von Keller et al. wird in Science 322, S.1765 ff. (2008) und in Current Opinion in Neurobiology, 18, S. 1-9 (2009) ein SPIM-Aufbau beschrieben, bei dem Beleuchtungs- und/oder Detektierungsobjektiv auf einem Piezo-Antrieb montiert ist, welcher eine Fokussierung erlaubt. Die Entfernungseinstellung erfolgt also hier über eine Verschiebung des ganzen Objektivs. Insbesondere behält die Frontlinse ihren Abstand von der Bildebene nicht bei, so daß eine Wechselwirkung mit der Probenkammer bestehen kann. Insbesondere gilt dies bei horizontalen Detektierungsstrahlengängen mit eingetauchten Detektierungsobjektiven: Hier zieht die notwendige Bewegung des Objektivs Dichtigkeitsprobleme nach sich. Andererseits ist auch ein bewegliches Element im Probenraum allgemein störend, da der Anwender hier ggf. Platz für verschiedenartige Zuführungen zur Probenkammer benötigt. Die Vibrationen, die bei der Objektivbewegung auftreten, können nachteilig auf die Probe übertragen werden, da sich zwischen Objektiv und Probe keine Luft, sondern eine entsprechende Flüssigkeit befindet.

Bei der Verwendung von Abtastern bzw. Scannern zur Erzeugung des Lichtblatts erfolgt die Abbildung des Scanners in die Pupille des Beleuchtungsobjektivs in der Regel nicht optimal, so daß die reine Ortsabtastung von Winkelabtastungsanteilen überlagert wird.

Im Stand der Technik sind auch Aufbauten bekannt, bei denen der Detektierungsstrahlengang in zwei Teilstrahlengänge aufgespalten wird, dies ist beispielsweise in den oben schon erwähnten beiden Veröffentlichungen von Keller et al. beschrieben. Für die Strahlaufspaltung werden Strahlteiler verwendet, die einen Teil des Lichts in den einen Teilstrahlengang transmittieren, den anderen Teil des Lichts in den anderen Teilstrahlengang reflektieren. Dazu werden übliche Dichroite mit einer relativ geringen Dicke von weniger als 2mm verwendet, die in einem divergenten Teil des Detektierungsstrahlengangs angeordnet sind. Vorteilhaft bei einer solchen Anordnung ist, daß in Richtung der Transmission kaum durch Astigmatismus verursachte Artekfakte auftreten. In Richtung des reflektierten Lichtes kommt es jedoch aufgrund von Oberflächenspannungen am Dichroit, die beispielsweise durch die Beschichtung hervorgerufen werden können oder durch einen unsachgemäßen Einbau, zu Bildartefakten wie Astigmatismus oder auch einer Defokussierung. Eine andere Möglichkeit der Aufspaltung in zwei Detektierungsteilstrahlengänge wird von Huisken et al. in Optics Letters 32, S.2608-2610 (2007) beschrieben. Hier ist der Dichroit im - in bezug auf den Strahlenverlauf - Unendlichen plaziert, so daß auch hier die bei der Transmission auftretenden Probleme minimiert sind. In bezug auf den reflektierten Teilstrahlengang kann allerdings auch hier bei der Verwendung herkömmlicher Dichroite das Problem der Oberflächenspannungen auftreten.

### Beschreibung der Erfindung

Aufgabe der Erfindung ist es, eine Vorrichtung der eingangs beschriebenen Art zu verbessern, die genannten Nachteile des Standes der Technik zu verringern und einem professionellen Anwender ein im Vergleich mit den bisherigen Lösungen handliches Gerät zur Verfügung zu stellen, welches Komponenten zur Beseitigung eines oder mehrerer dieser Nachteile aufweist.

Diese Aufgabe wird durch eine Vorrichtung gemäß Anspruch 1 gelöst. Vorteilhafte Ausgestaltungen werden in den Unteransprüchen beschrieben.

Bezüglich einer Anpassung der Ausdehnung des Lichtblattes durch eine beleuchtungsseitige Bildanpassung unter Berücksichtigung der auf der Detektierungsseite eingestellten Bildfeldgröße sowie im Hinblick auf eine Fokussierung von Beleuchtung und/oder Detektierung mit minimaler Kopplung an die Probenkammer und die Probe für ein Mikroskop der eingangs beschriebenen Art weist die Detektierungseinrichtung ein von einer Frontlinse des Detektierungsobjektivs räumlich getrennt angeordnetes und von dieser Frontlinse unabhängig verstellbares optisches Detektierungselement auf, mittels dessen die Größe eines Detektierungsbildfeldes stufenlos variierbar ist und / oder mittels dessen eine Detektierungsfokusebene im Probenbereich stufenlos verschiebbar ist. Unter Frontlinse wird dabei die im Strahlengang vorderste, d.h. dem Probenbereich am nächsten liegende Linse oder ein entsprechendes Kittglied verstanden.

Zum einen ist also mittels des optischen Detektierungselementes die Größe des Detektierungsbildfeldes stufenlos variierbar, zum anderen kann mit dem Detektierungselement eine Detektierungsfokusebene im Probenbereich stufenlos verschoben werden. Das Detektierungselement kann dabei so ausgelegt sein, daß es nur eine dieser beiden Aufgaben erfüllt, alternativ beide Einstellungen vornehmbar sind, oder daß beide Einstellungen gleichzeitig vorgenommen werden können. Das Detektierungselement kann integraler Bestandteil des Detektierungsobjektivs sein - etwa in Form von zwei oder mehr gegeneinander beweglichen Linsengliedern, wobei bei der Bewegung dieser Linsenglieder die Frontlinse nicht bewegt wird. Es kann aber auch als eigenständiges Bauteil im Strahlengang entfernt vom Detektierungsobjektiv angeordnet sein.

In einer vorteilhaften Ausgestaltung ist das optische Detektierungselement als Detektierungszoomelement ausgestaltet. Beispielsweise kann das Detektierungszoomelement zwei bewegliche Linsenglieder und dazwischen ein festes Linsenglied umfassen. Andere Konfigurationen des Detektierungselements mit nur einem beweglichen Linsenglied oder mit dem festen Linsenglied an anderer Stelle oder mit mehr als zwei beweglichen Linsengliedern sind ebenfalls möglich. Durch die Verwendung eines Detektierungszoomelements wird eine einfaches Schalten zwischen Überblickbild und Detailbild bzw. ein effizientes Lokalisieren eines interessanten Probenbereichs ermöglicht. Zur automatisierten Erzeugung von Stellgliederpositionstabellen kann eine Zwischenbildprobe verwendet werden, indem beispielsweise eine Transmissionsgitterstruktur in eine Zwischenbildebene des Detektierungsstrahlenganges eingebracht wird. Alternativ kann auch ein Kalibrierobjektiv verwendet werden. Durch eine entsprechende Verstellung des Detektierungszoomelements lassen sich außerdem verschiedene chromatische Fehler der Detektierungseinrichtung ausgleichen, für unterschiedliche Emissionswellenlängen und Zoomstellungen können unterschiedliche Tabellen generiert werden. Um diese Fehler auszugleichen, wird mittels des Detektierungszoomelements - ggf. anhand der Tabellen - die Fokusebene im Probenbereich stufenlos verschoben. Aufgrund der räumlichen Trennung zwischen der Frontlinse des Detektierungsobjektivs und Detektierungszoomelement muß das Detektierungsobjektiv bzw. insbesondere die Frontlinse des Detektierungsobjektivs selbst nicht bewegt werden, mit Hilfe des Detektierungszoomelements, welches seinerseits im Detektierungsstrahlengang fest angeordnet ist, läßt sich eine sogenannte Innenfokussierung des Detektierungsstrahlengangs vornehmen. Dies bietet Vorteile sowohl bei der Handhabung der Probe als auch bei der Aufnahme von Bildstapeln entlang der Detektierungsrichtung.

Die Detektierungsrichtung kann in einer anderen Ausgestaltung auch eine vom Detektierungselement und vom Detektierungsobjektiv räumlich getrennt angeordnete Tubuslinseneinheit aufweisen, mittels welcher die Detektierungsfokusebene im Probenbereich verschiebbar ist. In diesem Fall wird das Detektierungselement, insbesondere das Detektierungszoomelement nur zur Verstellung der Bildfeldgröße verwendet, die Verstellung der Fokusebene erfolgt beispielsweise durch die Verschiebung einer entsprechenden Tubuslinse oder eines Tubuslinsenelementes der Tubuslinseneinheit. Auch die Kombination beider Möglichkeiten, d.h. daß die Detektierungsfokusebene sowohl mit der Tubuslinseneinheit als auch mit dem Detektierungszoomelement verstellbar ist, ist eine mögliche Ausgestaltung.

In einer weiteren bevorzugten Ausgestaltung der Erfindung weist die Beleuchtungseinrichtung im Beleuchtungsstrahlengang mindestens ein Beleuchtungsobjektiv und ein von einer Frontlinse des Beleuchtungsobjektivs räumlich getrennt angeordnetes und von dieser unabhängig verstellbares optisches Beleuchtungselement auf, mittels dessen die Ausdehnung des Lichtblattes in Richtung der Detektierungsachse Z stufenlos variierbar ist und / oder mittels dessen eine Beleuchtungsfokusebene im Probenbereich stufenlos verschiebbar ist. Mit dem Beleuchtungselement läßt sich also die beleuchtungsseitige Bildfeldgröße bzw. Vergrößerung stufenlos anpassen, oder auch der Fokus festlegen. Das Beleuchtungselement kann integraler Bestandteil des Beleuchtungsobjektivs sein - etwa in Form von zwei oder mehr gegeneinander beweglichen Linsengliedern, wobei bei der Bewegung dieser Linsenglieder die Frontlinse nicht bewegt wird. Es kann aber auch als eigenständiges Bauteil im Strahlengang entfernt vom Beleuchtungsobjektiv angeordnet sein.

In besonders einfacher Weise ist dies möglich, wenn das Beleuchtungselement als Beleuchtungszoomelement mit vorteilhaft mindestens drei unabhängig voneinander verschiebbaren Linsengliedern ausgestaltet ist. Mit dem Beleuchtungszoomelement läßt sich dann, wenn die Detektierungseinrichtung über ein Detektierungszoomelement verfügt, die numerische Apertur der Beleuchtung optimal und stufenlos auf die Detektierungsbildfeldgröße abstimmen. Auf diese Weise wird die Häufigkeit eines Wechsels der Beleuchtungsobjektive reduziert, die Probenbelastung wird immer im kleinstmöglichen Rahmen gehalten. Das Verhältnis der detektierungsseitigen Bildfeldgröße und der beleuchtungsseitigen Bildfeldgröße kann dabei so eingestellt werden, daß das Verhältnis der Lichtblattdicken von 1 in der Mitte zu 2 am Rand des Sehfeldes eingestellt wird und bei Variation der Bildfeldgröße konstant gehalten wird.

Die Verwendung von drei verschiebbaren Elementen ist insofern vorteilhaft, als daß neben der richten Vergrößerung auch die richtige Abbildung von Pupille und Zwischenbild gewährleistet werden kann. Insgesamt sind die drei Freiheitsgrade einstellbar, die mit den drei getrennt voneinander verschiebbaren Elementen bedient werden können. Sollen nur entsprechend weniger Freiheitsgrade eingestellt werden, sind auch entsprechend weniger verschiebbare Linsenelemente im Detektierungszoomelement notwendig.

Zur Anpassung der beleuchtungsseitigen Bildfeldgröße an die Detektierungsbildfeldgröße ist es vorteilhaft, wenn das Beleuchtungszoomelement und das Detektierungszoomelement über eine Steuerungsschaltung zur Einstellung des Beleuchtungszoomelements in Abhängigkeit von der durch das Detektierungszoomelement und - selbstverständlich auch - durch die statische Vergrößerung der übrigen Detektierungsoptik vorgegebenen Detektierungsbildgröße gekoppelt sind. In diesem Fall wird die beleuchtungsseitige Bildfeldgröße bei einer Änderung der Detektierungsbildfeldgröße, die von einem Beobachter beispielsweise von Hand vorgenommen werden kann, automatisch in diese Änderung angepaßt. Die Steuerungsschaltung kann natürlich auch für Detektierungs- und / oder Beleuchtungselemente konzipiert sein, die Teil des entsprechenden Detektierungs- bzw. Beleuchtungsobjektivs sind.

Ferner wird ein Mikroskop der eingangs beschriebenen Art bereitgestellt, wobei die Beleuchtungseinrichtung zusätzlich erste Lichtblatterzeugungsmittel umfaßt, welche selbst wiederum Mittel zur Erzeugung eines rotationssymmetrischen Lichtstrahls und Abtastmittels zur lichtblattförmigen Abtastung des Probenbereichs entlang der Querachse in einem vorgegebenen Zeitintervall umfassen, wobei die Beleuchtungseinrichtung außerdem zweite Lichtblatterzeugungsmittel umfaßt, diese umfassend ein erstes astigmatisch wirkendes optisches Element mit mindestens einer astigmatischen Linse zur Erzeugung eines statischen Lichtblatts, und außerdem Auswahlmittel vorgesehen sind, mit denen zur Erzeugung des Lichtblattes entweder die ersten oder die zweiten Lichtblatterzeugungsmittel oder beide gemeinsam auswählbar sind. Als astigmatisch wirkende Linse kann beispielsweise eine Zylinderlinse verwendet werden, äquivalent dazu kann auch eine andere astigmatisch wirkende Linse wie eine Powell-Linse zum Einsatz kommen.

Während die ersten Lichtblatterzeugungsmittel ein quasistatisches Lichtblatt mit Hilfe eines schnellen Abtastspiegels erzeugen, so wird mit Hilfe der zweiten Lichtblatterzeugungsmittel ein statisches Lichtblatt erzeugt. Auf diese Weise lassen sich die Vorteile von einer scannenden Lichtblattererzeugung mit denen einer Lichtblatterzeugung mittels Zylinderoptik kombinieren. Die Abtastmittel umfassen zweckmäßig einen schnell schaltbaren Abtastspiegel und ein Abtastobjektiv. Wahlweise kann dabei auch entweder die eine oder die andere Methode zur Lichtblatterzeugung angewendet werden, so ist es beispielsweise möglich, den Abtastspiegel in seiner Nullposition zu lassen und mit Hilfe des zylinderoptischen Elements ein statisches Lichtblatt zu erzeugen, welches die Probe stroboskopartig beleuchtet, wofür der Abtastspiegel zu langsam ist. Zusätzlich können auch Winkelabtastmittel vorgesehen sein, mittels der ein Winkel, den das Lichtblatt mit der Beleuchtungsachse einschließt, variiert werden kann. Auch die Winkelabtastmittel können einen schnell schaltbaren Winkelabtastspiegel umfassen. Es kann sich dabei beispielsweise um einen Resonanzscanner auf mikro-elektromechanischer Basis handeln. Der Winkelabtastspiegel arbeitet in der Regel mit Frequenzen von 10 kHz, der Abtastspiegel zur Erzeugung des Lichtblatts mit einer Frequenz etwa zwischen 1 kHz und 2 kHz.

Der Winkelabtastspiegel kann konjugiert zur Beleuchtungsfokusebene angeordnet sein, wenn die zweiten Lichtblatterzeugungsmittel ausgewählt sind, d.h. sich beispielsweise das zylinderoptische Element im Strahlengang befindet. Mit Hilfe des Winkelabtastspiegels läßt sich die Probe aus verschiedenen Winkeln beleuchten, was zur Streifenreduzierung verwendet werden kann.

Zusätzlich zum schnellen Abtastspiegel zur Lichtblatterzeugung kann im Strahlengang in unmittelbarer Nähe hierzu auch ein weiterer schneller Abtastspiegel plaziert sein, mit dem beispielsweise das Lichtblatt für Zwecke der Justierung in Richtung der Detektierungsachse verschoben werden kann oder das Licht in einen weiteren Beleuchtungsstrahlengang umgelenkt werden kann, letzteres kann aber auch mittels eines gesonderten Umschaltspiegels erfolgen.

Zusätzlich kann dann auch ein zweites astigmatisch wirkendes optisches Element, welches ebenfalls als zylinderoptisches Element ausgestaltet sein kann, im Beleuchtungsstrahlengang angeordnet sein. Dieses dient der korrekten Abbildung eines der beiden Abtastspiegel in eine Pupillenebene während der jeweils andere Abtastspiegel auch ohne die Wirkung des zylinderoptischen Elements richtig abgebildet wird. Es handelt sich dabei im wesentlichen um eine Korrekturoptik zur korrekten Abbildung beider genannten Abtastspiegel.

Ferner wird ein Mikroskop der eingangs beschriebenen Art bereitgestellt, bei dem die Beleuchtungseinrichtung außerdem Mittel zur Umlenkung von Beleuchtungslicht in einen weiteren Beleuchtungsstrahlengang und zur Erzeugung eines weiteren Lichtblattes umfaßt, welches in Richtung der Beleuchtungsachse und in Richtung der Querachse annähernd flächig ausgedehnt ist, wobei der Beleuchtungsstrahlengang und der weitere Beleuchtungsstrahlengang aus im wesentlichen identischen optischen Elementen aufgebaut sind und die gleichen optischen Weglängen aufweisen und wobei das Lichtblatt und das weitere Lichtblatt so zueinander ausgerichtet sind, daß sie den Probenbereich auf der gleichen Beleuchtungsachse aus entgegengesetzten Richtungen beleuchten, wobei die Beleuchtungseinrichtung außerdem noch Umschaltmittel zur Umschaltung des Beleuchtungslichts zwischen dem Beleuchtungsstrahlengang und dem weiteren Beleuchtungsstrahlgang umfaßt und wobei die Detektierungseinrichtung ein Detektierungsobjektiv zur Abbildung von aus dem Probenbereich abgestrahltem Licht auf einen Flächendetektor zur ortsabhängigen Detektierung des Lichts umfaßt, wobei die Umschaltmittel einen schnell schaltbares Umschaltelement mit einer Schaltzeit von weniger als 10 ms umfassen, wobei eine vorgegebene Integrationszeit des Flächendetektors und die Schaltzeit des Umschaltelements so aufeinander abgestimmt sind, daß der Probenbereich während der Integrationszeit auf der Beleuchtungsachse mindestens einmal aus jeder Richtung beleuchtet wird.

Die Integrationszeiten für den Flächendetektor, das heißt die Zeit, innerhalb der bei einer Kamera beispielsweise der Verschluß offen ist und Meßwerte gesammelt werden, dürfen auch deswegen nicht zu lang sein, da ansonsten das Signal-Rausch-Verhältnis negativ beeinflußt wird. Insofern scheiden motorisch angetriebene Drehspiegel oder ähnliches in der Regel aus. Vorteilhaft verwendet man daher einen galvanometrisch angetriebenen Spiegel mit einer Schaltzeit von weniger als 10ms.

Anstelle eines Umschaltspiegels lassen sich auch andere Umschaltelemente verwenden, beispielsweise akustooptische oder elektrooptische Umschaltelemente, die sowohl auf reflexiver als auch äquivalent auf transmissiver Basis arbeiten können.

Wichtig ist die gegenüber der Integrationszeit des Flächendetektors - diese liegt in der Regel bei nicht mehr als 20 ms, da sich sonst Schwingungen negativ bemerkbar machen können - kurze Umschaltzeit, die so bemessen sein muß, daß der Probenbereich innerhalb der Integrationszeit mindestens einmal aus jeder Richtung beleuchtet wird. Auch Mehrfachabtastungen aus jeder Richtung sind denkbar, wenn die Umschaltzeit klein genug, beispielsweise weniger als 5 ms beträgt.

Auf diese Weise läßt sich eine schnell umschaltbare Zweistrahl-Beleuchtung erreichen, die sowohl für die sequentielle alternierende Beleuchtung der Probe von zwei Seiten, als auch für die quasi-simultane Beleuchtung der Proben von zwei Seiten gleichzeitig eingesetzt werden kann, je nach Beschaffenheit der Probe. Quasi-simultan deshalb, weil die Beleuchtungsrichtung während der Integrationszeit der Kamera wechselt und - sofern das Lichtblatt in scannender Weise durch das Abtasten der Probe mittels eines rotationssymmetrischen Lichtstrahls erzeugt wird - der Lichtstrahl mindestens zweimal über die Probe streicht, jedoch aus unterschiedlichen Richtungen. Bei den genannten kurzen Umschaltzeiten verändert die Probe ihre Lage in der Regel nicht, so daß im Bild effektiv die Probe als von beiden Seiten beleuchtet erscheint.

Effektiv wird also die Probe im Probenbereich aus entgegengesetzten Richtungen entlang der Beleuchtungsachse simultan beleuchtet, indem während der Integrationszeit des Flächendetektors mindestens einmal ein Umschalten des Beleuchtungslichts vom Beleuchtungsstrahlengang in den weiteren Beleuchtungsstrahlengang erfolgt.

Vorteilhaft ist der Umschaltspiegel dabei in einer zur Beleuchtungspupille konjugierten Ebene angeordnet. Dies hat den Vorteil, daß für die Umschaltung der durch die Auslenkung des Umschaltspiegels und durch die Verwendung des Abtastobjektivs erzeugte Ortsversatz ausgenutzt wird. Andererseits sind natürlich auch Aufbauten denkbar, in denen für die Schaltung direkt der Winkelversatz ausgenutzt wird.

Die Beleuchtungseinrichtung kann auch Lichtblatterzeugungsmittel umfassen, die ihrerseits wiederum Mittel zur Erzeugung eines rotationssymmetrischen Lichtstrahls und Abtastmittel zur lichtblattförmigen Abtastung des Probenbereichs entlang der Querachse umfassen, wobei die Abtastmittel beispielsweise einen schnell schaltbaren Abtastspiegel und ein Abtastobjektiv umfassen. Optional können auch Winkelabtastmittel, mittels der ein Winkel, den das Lichtblatt mit der Beleuchtungsachse einschließt, variierbar ist, vorgesehen sein. Diese Winkelabtastmittel können beispielsweise einen schnell schaltbaren Winkelabtastspiegel zur Reduzierung von Streifen umfassen.

Zusätzlich zum schnellen Abtastspiegel zur Lichtblatterzeugung kann im Strahlengang in unmittelbarer Nähe hierzu auch ein weiterer schneller Abtastspiegel plaziert sein, mit dem beispielsweise das Lichtblatt für Zwecke der Justierung in Richtung der Detektierungsachse verschoben werden kann. Dies kann auch mittels des Umschaltspiegels erfolgen.

Bei entsprechender Auslegung des Aufbaus kann der weitere schnelle Abtastspiegel bzw. Umschaltspiegel gleichzeitig durch einen geringfügigen Versatz auch zur Lichtblattjustage in Detektierungsrichtung herangezogen werden.

Dabei kann es von Vorteil sein, daß die Beleuchtungseinrichtung ein im Beleuchtungsstrahlengang oder im weiteren Beleuchtungsstrahlengang angeordnetes, astigmatisch wirkendes optisches Element, bevorzugt ein zylinderoptisches Element zur korrekten Abbildung des Abtastspiegels oder des Umschaltspiegels bzw. des weiteren Abtastspiegels in eine Pupillenebene umfaßt. Während der eine der beiden Spiegel korrekt in die Pupillenebene abgebildet wird, ist die Abbildung des anderen Spiegels ohne ein solches zusätzliches astigmatisch wirkendes Element nicht korrekt, es handelt sich als um eine Korrekturoptik zur korrekten Abbildung beider Spiegel.

Eine interessante Anwendungsmöglichkeit ergibt sich auch, wenn der Flächendetektor über getrennt auslesbare Bereiche von Pixeln verfügt, für die unterschiedliche Integrationszeiten vorgegeben werden können, wie es beispielsweise bei modernen Flächendetektoren auf CMOS-Basis der Fall ist. Hier kann die Schaltzeit des Umschaltelements zusätzlich auch mit diesen unterschiedlichen Integrationszeiten synchronisiert werden.

Ferner wird ein Mikroskop der eingangs beschriebenen Art bereitgestellt, bei dem die Detektierungseinrichtung zusätzlich im Detektierungsstrahlengang ein Detektierungsobjektiv und Aufteilungsmittel zur Aufteilung des Detektierungsstrahlengangs in zwei Teilstrahlengänge umfaßt, wobei in den Teilstrahlengängen wiederum jeweils ein ortsauflösenden Flächendetektor, auf den das zu detektierende Licht abgebildet wird, angeordnet ist, und wobei die Aufteilungsmittel ihrerseits wiederum mindestens einen dichroitischen Strahlteiler umfassen, wobei der dichroitische Strahlteiler im Strahlengang im Nah-Unendlichen bzgl. der ortsauflösenden Flächendetektoren angeordnet ist und eine Dicke von mindestens 3mm, bevorzugt von mindestens 4mm aufweist, wobei in jedem der beiden Teilstrahlengänge optische Abbildungselemente zur Abbildung des zu detektierenden Lichts auf den jeweiligen Flächendetektor angeordnet sind und in mindestens einem der beiden Teilstrahlengänge mindestens eine Wackelplatte zur Erzeugung eines Strahlversatzes entlang zweier zueinander orthogonalen Richtungen quer zur Detektierungsachse angeordnet ist. Auf diese Weise lassen sich automatisierte Überlagerungen von den aus den beiden Flächendetektoren ausgelesenen Meßwerten vornehmen. Insbesondere ist eine Anpassung an verschiedene Kameratypen, die endbenutzerseitig verwendet werden können, problemlos möglich. Während bei der Verwendung nur einer Wackelplatte diese in den zwei orthogonalen Richtungen gestellt werden muß, können mit äquivalenter Wirkung auch zwei Wackelplatten verwendet werden. Mit der einen der beiden Platten wird dann der Strahlversatz in der einen Richtung eingestellt, mit der anderen der Strahlversatz in der dazu orthogonalen Richtung.

Vorteilhaft ist dabei in einer Zwischenbildebene des Detektierungsstrahlengangs zuschaltbar eine Transmissionsstruktur angeordnet, mit dem die Bilder aneinander ausgerichtet werden können, beispielsweise eine Transmissionsgitterstruktur. Alternativ kann - an der Position des Detektierungsobjektivs - auch ein Kalibrierobjektiv verwendet werden. Ist die Ausrichtung der Bilder einmal erfolgt, so kann die Transmissionsgitterstruktur bzw. das Kalibierobjektiv wieder aus dem Strahlengang entfernt werden. Die Überlagerung der Bilder kann dann automatisch erfolgen. Die Einstellung des Versatzes erfolgt mit Hilfe der Wackelplatten, wobei die Anordnung der Wackelplatten in einem der beiden Teilstrahlengänge ausreichend ist.

Die optischen Abbildungselemente in den jeweiligen Teilstrahlengängen können verschiebbar angeordnet sein, so daß die Fokussierung auf den jeweiligen Flächendetektor einstellbar ist. Dies ist insbesondere zum Ausgleich von Farblängsfehlern vorteilhaft, wenn beispielsweise Messungen an mit zwei verschiedenen Farbstoffen markierten Proben durchgeführt werden und die spektralen Emissionsbereiche bzw. Emissionswellenlängen in den beiden Teilstrahlengängen detektiert werden sollen. Dabei ist es ausreichend, wenn mindestens eines der optischen Abbildungselemente verschiebbar ist, sofern die Fokussierung auch mit anderen Mitteln einstellbar ist.

Ergänzend oder alternativ kann auch in jedem der beiden Teilstrahlengänge zwischen dem optischen Abbildungselement und dem Flächendetektor, also dem divergenten Teil des Strahlengangs, eine Keilstruktur aus zwei in den Strahlengang ragenden, quer zur Strahlrichtung gegeneinander verschiebbaren optischen Keilen angeordnet sein, so daß die Fokussierung auf den jeweiligen Flächendetektor durch Verschiebung der Keile gegeneinander eingestellt werden kann.

Anstatt den Strahlteiler im Strahlengang im Nah-Unendlichen anzuordnen, kann der dichroitische Strahlteiler auch im divergenten Teil des Strahlengangs zwischen den Flächendetektoren und einem optischen Abbildungselement zur Abbildung des zu detektierenden Lichts auf die Flächendetektoren angeordnet sein. In dem Teilstrahlengang, der das vom Strahlteiler transmittierte Licht erfaßt, ist dann zwischen Flächendetektor und Strahlteiler eine Glasplatte von gleicher Dicke wie der Strahlteiler angeordnet, die mit dem Strahlteiler einen Winkel von annähernd 90° einschließt. Auf diese Weise wird ein durch die Verwendung des Strahlteilers im Transmissionsteilstrahlengang hervorgerufener Astigmatismus wieder korrigiert.

In einer besonders bevorzugten Ausgestaltung ist diese Glasplatte als Wackelplatte ausgestaltet, sie kann also auch zur Erzeugung eines Strahlversatzes quer zur Strahlrichtung verwendet werden, so daß auch hier eine automatisierte Überlagerung der aus den Flächendetektoren ausgelesenen Meßwerte vorgenommen werden kann.

Zur Änderung der Fokusposition kann in einer einfachen Ausgestaltung das optische Abbildungselement verschiebbar angeordnet sein, so daß die Fokussierung auf die Flächendetektoren eingestellt werden kann. Falls zwei verschiedene Wellenlängen gemessen werden, so ist davon auszugehen, daß für mindestens eine der beiden Wellenlängen der Fokus nicht genau eingestellt ist. Um dies zu umgehen, ist mindestens in einem der beiden Teilstrahlengänge zwischen dem Strahlteiler und dem Flächendetektor eine Keilstruktur aus zwei in den Strahlengang ragenden, quer zur Strahlrichtung verschiebbaren optischen Keilen anordnet, so daß die Fokussierung auf den jeweiligen Flächendetektor einstellbar ist. In diesem Fall wird zuerst mit Hilfe der Verschiebung des optischen Abbildungselementes der Strahlengang fokussiert, in dem sich die Keilstruktur nicht befindet, also beispielsweise der TransmissionsTeilstrahlengang. Dies wird anhand der einen der beiden zu messenden Wellenlängen vorgenommen. Sodann erfolgt mittels einer Verschiebung der beiden Keile gegeneinander im anderen Strahlengang, also beispielsweise im Reflexions-Teilstrahlengang, eine Feinjustierung bzgl. der anderen Wellenlänge. Alternativ kann auch das optische Abbildungselement fest anordnet sein und es können in jedem der beiden Teilstrahlengänge Keilstrukturen entsprechend angeordnet sein.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die unter anderem auch erfindungswesentliche Merkmale offenbaren, noch näher erläutert. Es zeigen:
- Fig.1: einen Detektierungsstrahlengang für ein SPIM-Mikroskop,
- Fig.2: drei verschiedene Einstellungen des Beleuchtungsstrahlenganges für ein SPIM-Mikroskop,
- Fig.3: Details für die in Fig.2 gezeigten Einstellungen,
- Fig.4: einen weiteren Beleuchtungsstrahlengang,
- Fig.5: einen Beleuchtungsstrahlengang für eine Beleuchtung von zwei Seiten,
- Fig.6: die Auswirkungen der Beleuchtung von zwei Seiten auf eine Probe,
- Fig.7: ein Detail eines Detektierungsstrahlenganges mit zwei Kanälen und
- Fig.8: ein Detail eines weiteren Detektierungsstrahlengangs mit zwei Kanälen.

### Ausführliche Beschreibung der Zeichnungen

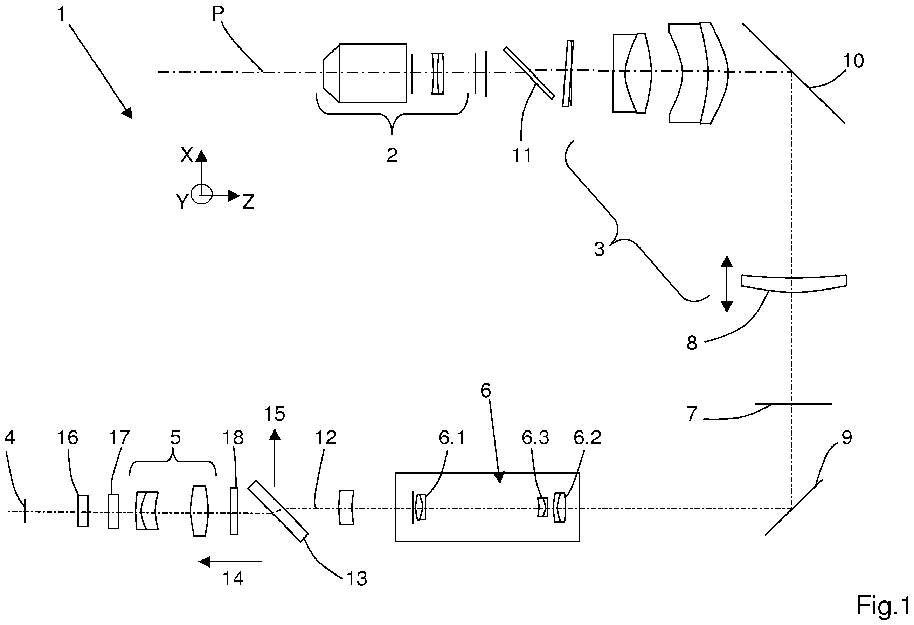

In Fig.1 ist ein Detektierungsstrahlengang eines Mikroskops, welches nach dem Prinzip der SPIM-Technologie arbeitet, dargestellt. Nicht dargestellt, jedoch dazugehörend, ist in Fig.1 eine Beleuchtungseinrichtung des Mikroskops, mit der eine Lichtblatt zur Beleuchtung eines Probenbereich P erzeugt wird. Das Lichtblatt ist in Richtung einer Beleuchtungsachse X eines Beleuchtungsstrahlenganges und in Richtung einer Querachse Y, welche quer zu Beleuchtungsachse X liegt, annähernd flächig ausgebildet. Entlang des Detektierungsstrahlengangs sind Elemente einer Detektierungseinrichtung 1 dargestellt, mit der Licht detektiert wird, welches entlang einer Detektierungsachse Z aus dem Probenbereich P abgestrahlt wird. Die Beleuchtungsachse X und Detektierungsachse Z stehen annähernd senkrecht aufeinander, ebenso die Querachse Y und die Detektierungsachse Z.

Die Detektierungseinrichtung 1 umfaßt im Detektierungsstrahlengang angeordnet ein Detektierungsobjektiv 2. Weitere wesentliche Elemente im Detektierungsstrahlengang 1 sind eine Tubuslinseneinheit 3 sowie ein ortsauflösender Flächendetektor 4, der beispielsweise als CCD-Chip oder als CMOS-Chip einer entsprechenden Kamera ausgestaltet sein kann. Auf diesen Flächendetektor 4 wird das Licht mittels eines optischen Abbildungselements 5 abgebildet.

Ein wesentliches Element der Detektierungseinrichtung 1 ist ein von der Frontlinse des Detektierungsobjektivs 2 räumlich getrennt angeordnetes und von dieser unabhängig verstellbares optisches Detektierungselement. Zum einen ist mittels des optischen Detektierungselementes die Größe eines Detektierungsbildfeldes stufenlos variierbar und zum anderen kann mit dem Detektierungselement eine Detektierungsfokusebene im Probenbereich P stufenlos verschoben werden. Das Detektierungselement kann dabei so ausgelegt sein, daß es entweder nur eine der beiden Aufgaben erfüllt, beide Aufgaben alternativ oder beide Einstellungen gleichzeitig vorgenommen werden können. Das Detektierungselement kann integraler Bestandteil des Detektierungsobjektivs 2 sein - etwa in Form von zwei oder mehr gegeneinander beweglichen Linsengliedern, wobei bei der Bewegung dieser Linsenglieder die Frontlinse nicht bewegt wird. Es kann aber auch als eigenständiges Bauteil im Strahlengang entfernt vom Detektierungsobjektiv 2 angeordnet sein. Bei einer Verstellung des Detektierungselements - d.h. einer Verschiebung eines oder mehrerer seiner Linsenglieder entlang des Strahlenganges bleibt die Frontlinse fest an ihrem Platz.

Das optische Detektierungselement als eigenständiges Bauteil kann beispielsweise, wie in Fig. 1 dargestellt, als Detektierungszoomelement 6 mit zwei beweglichen Linsengliedern 6.1 und 6.2 und einem festen Linsenglied 6.3 dazwischen ausgestaltet sein. Durch die Verwendung eines Detektierungszoomelements 6 wird ein einfaches Schalten zwischen Überblickbild und Detailbild bzw. ein effizientes Lokalisieren der interessierenden Probenteile ermöglicht. Mit Hilfe des Detektierungszoomelements 6 ist außerdem die Aufnahme von Bildstapeln entlang der Detektierungsrichtung Z unter verschiedenen Probenwinkeln - sogenannter Multi-View-Bildstapel - in einfacher Weise möglich. Das Detektierungszoomelement 6 ist vollständig motorisch verstellbar. Zur automatisierten Erzeugung von Stellgliederpositionstabellen kann eine Zwischenbildprobe verwendet werden, indem eine Transmissionsstruktur, beispielsweise eine Transmissionsgitterstruktur 7 in eine Zwischenbildebene des Detektierungsstrahlengangs eingefahren wird. In Fig.1 ist diese Transmissionsgitterstruktur 7 im eingefahrenen Zustand gezeigt, sie kann aber auch herausgefahren werden und ist zur Detektierung, wenn alle Parameter bestimmt sind, nicht notwendig. Alternativ kann an Stelle des Detektierungsobjektivs 2 im Strahlengang auch ein nicht gezeigtes Kalibrierobjektiv verwendet werden.

Auch die Aufnahme von sogenannten Multi-Track-Aufnahmen bei verschiedenen Wellenlängen des Lichts kann erleichtert werden, da ausgenutzt werden kann, daß für unterschiedliche Emissionswellenlängen unterschiedliche Tabellen für die Positionseinstellungen generiert werden können. Durch eine entsprechende Verstellung des Detektierungszoomelements 6 lassen sich auf diese Weise Farblängsfehler der Detektierungseinrichtung 1 ausgleichen.

Zu diesem Zweck wird vorteilhaft mittels des Detektierungszoomelements 6 die Fokusebene im Probenbereich P stufenlos verschoben. Da das Detektierungszoomelement 6 vom Detektierungsobjektiv 2 räumlich getrennt ist, sind die zu bewegenden Massen sehr klein, denn das Detektierungsobjektiv 2 selbst muß nicht bewegt werden. Mit Hilfe des Detektierungszoomelements 6, welches seinerseits im Detektierungsstrahlengang fest angeordnet ist, läßt sich eine sogenannte Innenfokussierung des Detektierungsstrahlengangs erreichen. Aufgrund der geringeren zu bewegenden Massen lassen sich Bildstapel entlang der Detektierungsrichtung Z, bei der die Fokussierung verstellt werden muß, mit höheren Genauigkeiten und Geschwindigkeiten aufnehmen.

Zudem wird der Wasserabschluß der Probenkammer vereinfacht, weil sich das Detektierungsobjektiv 2 bzw. die Frontlinse des Detektierungsobjektivs relativ zur Probenkammer, in der die Probe gelagert ist und deren Probenbereich P beleuchtet wird, nicht bewegt. Wechselwirkungen mit der Probe durch Vibrationen werden so vermieden, auf die Probe wirken keine zusätzlichen Kräfte. Zudem ist es möglich, die Detektierungsfokusebene in Abhängigkeit von der Temperatur der Flüssigkeit, mit der die Probenkammer gefüllt ist, vorzugeben, wozu die Temperatur dieser Flüssigkeit gemessen und in Abhängigkeit davon eine Fokusposition eingestellt wird. Ändert sich die Temperatur, so wird dies über eine Auswertungs- und eine Steuerungseinheit an das Detektierungselement weitergegeben, die Detektierungsfokusebene wird entsprechend angepaßt. Auf diese Weise ist ein Ausgleich der Variation des Brechungsindexes der Flüssigkeit, mit der die Probenkammer gefüllt ist möglich. Als Flüssigkeit bzw. Immersionsmedium wird häufig Wasser verwendet. Dabei können für verschiedene Flüssigkeiten entsprechende Daten bzgl. des Brechungsindexes hinterlegt sein, die Verstellung kann dann automatisch korrekt erfolgen, wenn man vorgibt, welches Immersionsmedium verwendet wird. Diese Art der temperaturabhängigen Variation der Detektierungsfokusebene läßt sich beispielsweise bei sogenannten Hitzeschockexperimenten anwenden, bei der die Probe bzw. die Immersionsflüssigkeit innerhalb kürzester Zeit hohen Temperaturänderungen ausgesetzt wird.

Im gezeigten Beispiel ist das Detektierungszoomelement 6 zwar mit zwei beweglichen Linsengliedern 6.1, 6.2 ausgestaltet, zwischen denen sich ein festes Linsenglied 6.3 befindet, jedoch sind auch andere Ausgestaltungen mit mehr verschiebbaren Linsengliedern, oder mit nur einem verschiebbaren Linsenglied möglich. So kann beispielsweise durchaus vorgesehen sein, das Detektierungszoomelement 6 nicht für die Innenfokussierung, also für die stufenlose Verstellung der Detektierungsfokusebene zu verwenden. In diesem Fall kann beispielsweise eine Tubuslinse 8 der Tubuslinseneinheit 3 zur Verstellung der Detektierungsfokusebene im Probenbereich, also zur Innenfokussierung verwendet werden. Diese Tubuslinse 8 ist dann entlang des Strahlengangs verschiebbar angeordnet, wie durch den Doppelpfeil symbolisiert wird. Auch die Tubuslinseneinheit 3 ist vom Detektierungsobjektiv 2 räumlich getrennt, ebenso vom Detektierungselement bzw. dem Detektierungszoomelement 6.

Die Detektierungseinrichtung 1 weist außerdem noch weitere optische Elemente auf, von denen hier noch einige wesentliche beschrieben werden. Für eine kompakte Bauweise wird der Strahlengang über Umlenkspiegel 9 und 10 vom Probenbereich P auf den ortsauflösenden Flächendetektor 4 gelenkt. Mittels des Strahleinkopplers 11 läßt sich optional ein zusätzlicher Strahlengang einkoppeln, der für die Auflichtbeleuchtung verwendet werden kann. Außerdem kann im Strahlengang zwischen dem Zoomelement 6 und dem Abbildungselement 5 im Nah-Unendlich-Bereich - d.h. in einem Bereich, in der Strahl möglichst kollimiert ist, aber nicht notwendigerweise vollständig kollimiert - 12 des Strahlengangs ein dichroitischer Strahlteiler 13 angeordnet sein, der als Aufteilungsmittel zur Aufteilung des Detektierungsstrahlengangs in zwei Teilstrahlengänge 14 und 15 dient, wobei in den Teilstrahlengängen 14 und 15 jeweils ein ortsauflösender Flächendetektor, auf den das zu detektierende Licht abbildbar ist, angeordnet ist. In Fig.1 sind nur die optischen Elemente für den Teilstrahlengang 14 gezeigt, der Teilstrahlengang 15 kann identisch aufgebaut sein.

Der dichroitische Strahlteiler weist dabei eine Dicke von mehr als 3 mm auf, so daß im Stand der Technik auftretende Probleme wie Abbildungsfehler durch das Auftreten von Oberflächenspannungen vermieden werden können. In jedem der beiden Teilstrahlengänge 14 und 15 sind optische Abbildungselemente zur Abbildung des zu detektierenden Lichts auf den jeweiligen Flächendetektor anordnet. In mindestens einem der beiden Teilstrahlengänge 14 oder 15 können optional auch noch Wackelplatten 16 und 17 angeordnet sein, mit denen sich ein Versatz in den beiden orthogonalen Richtungen quer zur Detektierungsachse Z einstellen läßt. Auf diese Weise läßt sich eine automatisierte Überlagerung von den aus den beiden Flächendetektoren ausgelesenen Meßwerten vornehmen. Dies ist beispielsweise dann sinnvoll, wenn Bilder für zwei verschiedene Emissionswellenlängen getrennt aufgenommen und überlagert werden sollen. Dazu ist in Fig.1 auch im Teilstrahlengang 14 ein optional eingebrachter Emissionsfilter 18 dargestellt, mit dem eine Wellenlängenselektion vorgenommen werden kann. Ein entsprechender Emissionsfilter 18, der eine andere Wellenlänge auswählt, kann im anderen Teilstrahlengang 15 angeordnet sein. Um die Bildüberlagerung korrekt einzustellen, kann zur Kalibrierung außerdem noch eine Zwischenbildprobe verwendet werden, in dem in einer Zwischenbildebene des Detektierungsstrahlengangs die oben schon erwähnte Transmissionsgitterstruktur 7 zugeschaltet wird oder ein nicht gezeigtes Kalibrierobjektiv anstelle des Detektierungsobjektivs 2 verwendet wird.

Außerdem können auch die optischen Abbildungselemente in den jeweiligen Teilstrahlengängen verschiebbar angeordnet sein, so daß die Fokussierung auf jeden jeweiligen Flächendetektor eingestellt werden kann.

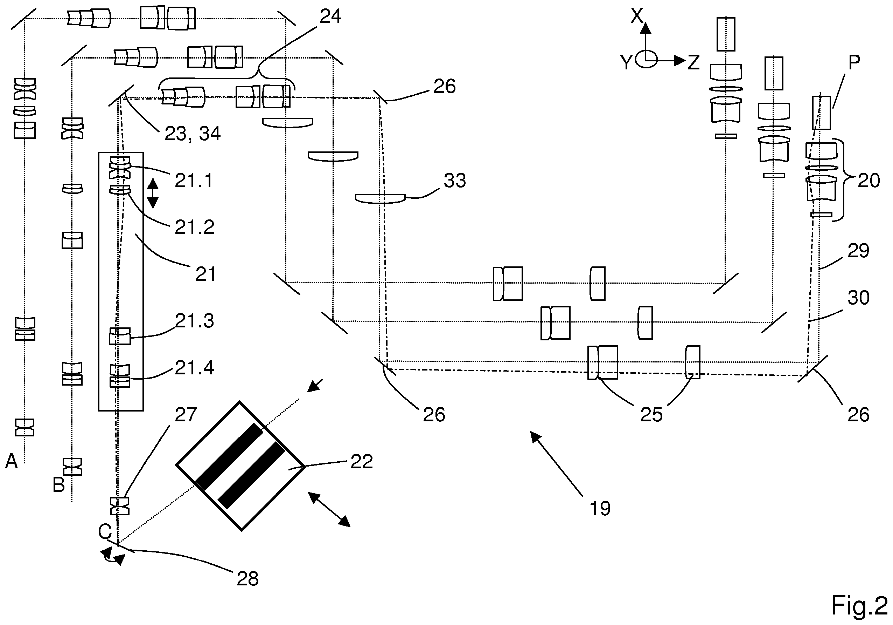

In Fig. 2 ist eine Beleuchtungseinrichtung 19 gezeigt, mit der ein Lichtblatt zur Beleuchtung eines Probenbereichs P erzeugt wird, welches in Richtung einer Beleuchtungsachse X eines Beleuchtungsstrahlenganges und in Richtung einer Querachse Y quer zur Beleuchtungsachse X annähernd flächig ausgebildet ist. Auf die Darstellung einer Detektierungseinrichtung 1, wie sie in Fig.1 beispielhaft gezeigt ist, wurde der Übersichtlichkeit halber verzichtet, beide lassen sich jedoch ohne weiteres miteinander kombinieren, wobei eine Ausrichtung entsprechend der in den Figuren 1 und 2 gezeigten Koordinatensysteme erfolgt.

Die in Fig.2 dargestellte Beleuchtungseinrichtung 19 ist dabei in drei verschiedenen Konfigurationen A, B und C dargestellt. Die Beleuchtungseinrichtung 19 umfaßt dabei im Beleuchtungsstrahlengang mindestens ein Beleuchtungsobjektiv 20 und ein von einer Frontlinse des Beleuchtungsobjektivs 20 räumlich getrennt angeordnetes und unabhängig von dieser verstellbares Beleuchtungselement, mittels dessen die Ausdehnung des Lichtblattes in Richtung der Detektierungsachse Z stufenlos variierbar ist und / oder mittels dessen eine Beleuchtungsfokusebene im Probenbereich P stufenlos verschiebbar ist. Das Beleuchtungselement kann integraler Bestandteil des Beleuchtungsobjektivs 20 sein - etwa in Form von zwei oder mehr gegeneinander beweglichen Linsengliedern, wobei bei der Bewegung dieser Linsenglieder die Frontlinse nicht bewegt wird. Es kann aber auch als eigenständiges Bauteil im Strahlengang entfernt vom Beleuchtungsobjektiv 20 angeordnet sein. Bei einer Verstellung des Beleuchtungselements - d.h. einer Verschiebung eines oder mehrerer seiner Linsenglieder entlang des Strahlenganges bleibt die Frontlinse fest an ihrem Platz.

Mit dem Beleuchtungselement läßt sich also das Lichtblatt gemäß der Bildfeldgröße stufenlos anpassen bzw. der Fokus festlegen. Dies ist beispielsweise dann in einfacher Weise möglich, wenn das Beleuchtungselement als Beleuchtungszoomelement 21 ausgestaltet ist. Mit diesem läßt sich dann, insbesondere wenn auch die Detektierungseinrichtung 1 über ein Detektierungszoomelement 6 verfügt, die numerische Apertur der Beleuchtung optimal und stufenlos auf die Detektierungsbildfeldgröße abstimmen. Im Vergleich zu anderen Lösungen, wie wechselbaren Teleskopen ist mittels des Beleuchtungszoomelements 21 die Anpassung der numerischen Apertur stufenlos möglich. Im Vergleich zu anderen Lösungen wie Blenden geht dabei kein Anregungslicht verloren, so daß im Endeffekt nur eine geringere Leistung der Beleuchtungsquelle - in der Regel eines Lasers - benötigt wird. Auf diese Weise wird die Probenbelastung reduziert, es sind höhere Leistungsdichten erreichbar und die Beleuchtungsobjektive 20 müssen seltener gewechselt werden. Das Verhältnis von der Detektierungsbildfeldgröße und der Beleuchtungsbildfeldgröße kann dabei so eingestellt werden, daß das Verhältnis der Lichtblattdicken von 1 in der Mitte zu 2 am Rand des Sehfeldes eingestellt und bei Variation der Bildfeldgröße konstant gehalten werden kann.

Wenn sich mit Hilfe des Beleuchtungselements außerdem noch die Beleuchtungsfokusebene im Probenbereich P stufenlos verschieben läßt - auch diese Verstellung wird ähnlich wie beim Detektierungszoomelement 6 als Innenfokussierung vorgenommen, bei dem ein oder mehrere Linsenelemente des Beleuchtungszoomelements 21 gegeneinander verschoben werden - , kann die Taille des Lichtblattes auch über das Sehfeld in Richtung der Beleuchtungsachse X kontinuierlich verschoben werden, man spricht von einer Taillenabtastung. Dabei ist über das gesamte Sehfeld die höchste Auflösung in der Detektierungsrichtung Z erreichbar.

In Kombination mit einer Beleuchtung von zwei Seiten entlang der Beleuchtungsachse X lassen sich durch die Innenfokussierung die Taillen auf ca. ¼ und ca. ¾ des Sehfeldes positionieren. Auf diese Weise kann die Variation der Dicke des Lichtblattes deutlich geringer gehalten werden als im Fall einer einseitigen Beleuchtung. Schließlich ist in Analogie zur temperaturabhängigen Fokussierung, die im Zusammenhang mit dem Detektierungszoomelement 6 beschrieben wurde, auch eine Kompensation der Lage der Lichtblatt-Taille in Abhängigkeit von der Temperatur des Immersionsmediums bzw. von unterschiedlichen optischen Dicken des Einbettungsmediums für die Probe möglich.

Zur Anpassung der beleuchtungsseitigen Bildfeldgröße bzw. der Lichtblattausdehnung an die Detektierungsbildfeldgröße ist es dabei vorteilhaft, das Beleuchtungszoomelement 21 und das Detektierungszoomelement 6 über eine Steuerungsschaltung zur Einstellung des Beleuchtungszoomelements 21 in Abhängigkeit von der durch das Detektierungszoomelement 6 vorgegebenen Detektierungsbildfeldgröße zu koppeln. In diesem Falle wird die beleuchtungsseitige Bildfeldgröße bei einer Änderung der Detektierungsbildfeldgröße, die von einem Beobachter beispielsweise von Hand vorgenommen wird, automatisch an diese Änderung angepaßt. Der Beobachter kann daher auf eine beleuchtungsseitige Anpassung des Beleuchtungszoomelements 21 verzichten, dies erledigt die Steuerungsschaltung, so daß immer die optimale numerische Apertur für die Beleuchtung eingestellt wird.

Das in Fig.2 gezeigte Beleuchtungszoomelement 21 ist mit mindestens drei unabhängig voneinander verschiebbaren Linsengliedern 21.1, 21.2 und 21.3 sowie einem festen Linsenglied 21.4 ausgestaltet. Die Strahlengänge A, B und C zeigen drei verschiedene Stellungen des Beleuchtungszoomelements 21. Die Verwendung von drei verschiebbaren Elementen ist in diesem Fall erforderlich, um neben der richtigen Vergrößerung auch die richtige Abbildung von Pupille und Zwischenbild zu gewährleisten, insgesamt sind also drei Freiheitsgrade einstellbar. Müssen weniger Freiheitsgrade beachtet werden, reichen auch weniger verschiebbare Elemente aus.

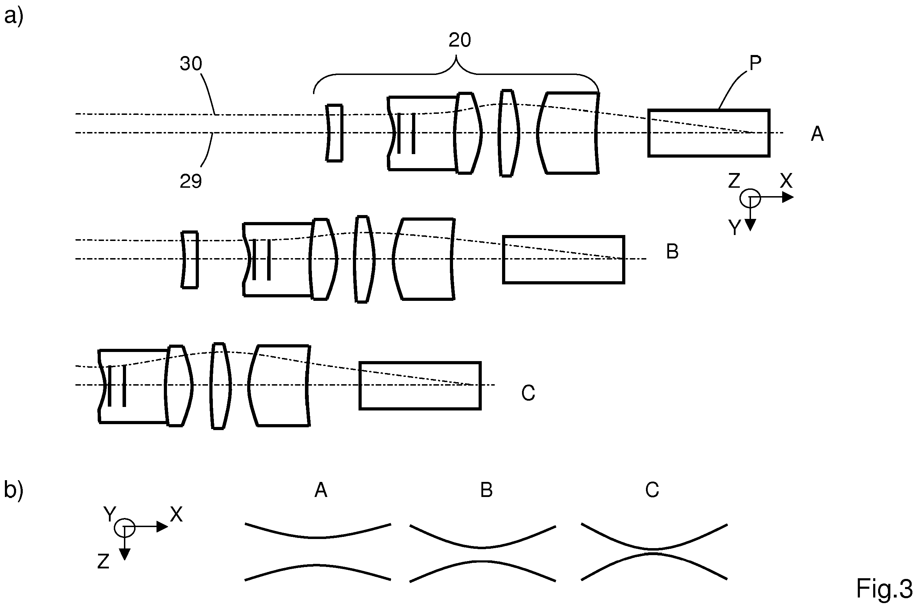

Der Effekt des Beleuchtungszoomelements 21 ist in Fig.3 für die drei verschiedenen Konfigurationen A, B und C nochmals näher dargestellt. Das Beleuchtungszoomelement 21 entfaltet seine Wirkung sowohl in der von der Beleuchtungsachse X und der Querachse Y eingeschlossenen Ebene, wie in Fig.3a dargestellt, als auch in der von der Beleuchtungsachse X mit der Detektierungsachse Z eingeschlossenen Ebene, wie in Fig.3b dargestellt. In Fig.3b ist zu sehen, wie die Lichtblattdicke von der Stellung A über die Stellung B zur Stellung C des Beleuchtungszoomelements 21 durch Anpassung der Beleuchtungsapertur dünner gestaltet wird. In Fig.3a zeigt sich die Anpassung, die sich durch die Einstellung des Beleuchtungszoomelements 21 ergibt, in der X-Y-Ebene.

Um die Flexibilität bzgl. der Wahl der Beleuchtungsapertur weiter zu steigern, kann die Beleuchtungseinrichtung 19 auch einen Teleskopwechsler 22 enthalten, der den Bereich der erreichbaren Aperturen entsprechend erhöht. Alternativ oder ergänzend kann auch das Beleuchtungsobjektiv 20 ausgewechselt werden, um einen ähnlichen Effekt zu erzeugen.

Die in Fig. 2 gezeigte Beleuchtungseinrichtung 19 umfaßt außerdem erste Lichtblatterzeugungsmittel, die wiederum Mittel zur Erzeugung eines rotationssymmetrischen Lichtstrahls und Abtastmittel zur lichtblattförmigen Abtastung des Probenbereichs entlang der Querachse Y in einem vorgegebenen Zeitintervall enthalten. Während die Mittel zur Erzeugung des rotationssymmetrischen Lichtstrahls nicht dargestellt sind, umfassen die Abtastmittel des in Fig.2 gezeigten Aufbaus einen Abtastspiegel 23, mit dem der rotationssymmetrische Lichtstrahl über die Probe geführt wird und zwar so schnell, daß der Scanner die Probe während der Integrationszeit - also der Zeit, die vergeht bevor die Meßwerte am Detektor ausgelesen werden - mindestens einmal, bevorzugt aber auch mehrfach, in jedem Fall aber immer vollständig überstreicht, d.h. die Integrationszeit darf nicht enden, während der Lichtstrahl noch über die Probe streicht. Integrationszeit, Abtastzeit und Abtastdurchläufe werden aufeinander abgestimmt, so daß das vorgegebene Zeitintervall im wesentlichen der Integrationszeit entspricht. Die Wirkung des Abtastspiegels 23 ist allerdings in Fig.2 bzw. Fig.3 nicht dargestellt.

Das den Abtastspiegel 23 verlassende Beleuchtungslicht wird über ein Abtasttobjektiv 24, ein Tubuslinsenelement 25 und das Beleuchtungsobjektiv 20 in den Probenbereich P abgebildet. Um den Aufbau möglichst kompakt zu gestalten, werden zur Strahlumlenkung außerdem verschiedene Spiegel 26 verwendet.

Zusätzlich zum Abtastspiegel 23 sind bei der Beleuchtungseinrichtung 19 optional auch zweite Lichtblatterzeugungsmittel vorgesehen, welche ein erstes astigmatisch wirkendes optisches Element, im Beispiel ein erstes zylinderoptisches Element 27 mit mindestens einer astigmatischen Linse, im Beispiel einer Zylinderlinse, zur Erzeugung eines statischen Lichtblattes umfassen. Außerdem sind nicht gezeigte Auswahlmittel vorgesehen, mit denen zur Erzeugung des Lichtblattes entweder die ersten oder die zweiten Lichtblatterzeugungsmittel oder beide gemeinsam auswählbar sind. Es wird also entweder der Abtastspiegel 23, das zylinderoptische Element 27 oder beide gemeinsam verwendet. Das zylinderoptische Element 27 kann beispielsweise so ausgestaltet sein, daß es von der Seite in den Strahlengang eingefahren oder ausgefahren werden kann. Auf diese Weise lassen sich die eigens beschriebenen Vorteile beider Methoden zur Lichtblatterzeugung kombinieren. Statt einer Zylinderlinse kann das erste astigmatisch wirkende optische Element auch eine Powell-Linse oder andere astigmatisch wirkende Linsen umfassen.

Insbesondere ist die generelle Abdeckung des Bildfeldes im Probenbereich P an das zylinderoptische Element 27 gekoppelt, welches hier im gezeigten Aufbau gleichzeitig mit dem Abtastspiegel 23 verwendet wird. Allerdings vermag das zylinderoptische Element 27 nicht bei jeder Stellung des Beleuchtungszoomelements 21 das volle Bildfeld abzudecken.

In Fig.2 umfaßt die Beleuchtungseinrichtung 19 außerdem optionale Winkelabtastmittel. Die Winkelabtastmittel umfassen bei der in Fig.2 gezeigten Ausführung einen schnell schaltbaren Winkelabtastspiegel 28. Mittels des Winkelabtastspiegels 28 ist der Winkel, den das Lichtblatt mit der Beleuchtungsachse X einschließt, variierbar. Als Winkelabtastspiegel 28 kann beispielsweise ein Resonanz- oder Polygonscanner verwendet werden, auch auf mikro-elektromechanischer Basis. Er ist im Falle der Verwendung des ersten zylinderoptischen Elements 27 konjugiert zur Beleuchtungsfokusebene angeordnet. Mit Hilfe des Winkelabtastspiegels 28 läßt sich die Probe aus verschiedenen Winkeln beleuchten, was zur Streifenreduzierung verwendet werden kann. Die Wirkung des Winkelabtastspiegels 28 wird in Fig. 2 für die Konfiguration C durch die beiden Strahlenverläufe 29 und 30 verdeutlicht. Während im Strahlenverlauf 29 der Winkelabtastspiegel auf Nullposition, also nicht ausgelenkt steht, zeigt der Strahlenverlauf 30 den Verlauf bei einer von Null verschiedenen Auslenkung des Winkelabtastspiegels 28. Dies ist nochmals für alle Konfigurationen A, B, C in Fig.3a dargestellt. Der Winkelabtastspiegel 28 arbeitet in der Regel mit Frequenzen von 10 kHz, der Abtastspiegel 23 zur Erzeugung des Lichtblatts mit einer Frequenz etwa zwischen 1 kHz und 2 kHz.

Die Verwendung des zylinderoptischen Elements 27 bringt auch insofern Vorteile, als bei gleichzeitiger Verwendung des Winkelabtastspiegels 28 durch eine asynchrone Ansteuerung von Winkelabtastspiegel 28 und dem schnell schaltbaren Abtastspiegel 23 verursachte eventuell auftretende Schwebungsartefakte durch das in den Strahlengang eingebrachte zylinderoptische Element 27 teilweise ausgeschmiert werden. Aufgrund der Parallelisierung des Lichtstrahls durch Verwendung des zylinderoptischen Elements 27 ist die Beleuchtungsintensität gegenüber der alleinigen Verwendung des schnell schaltbaren Abtastspiegels 23 reduziert, was eine verbesserte Probenschonung mit sich bringt.

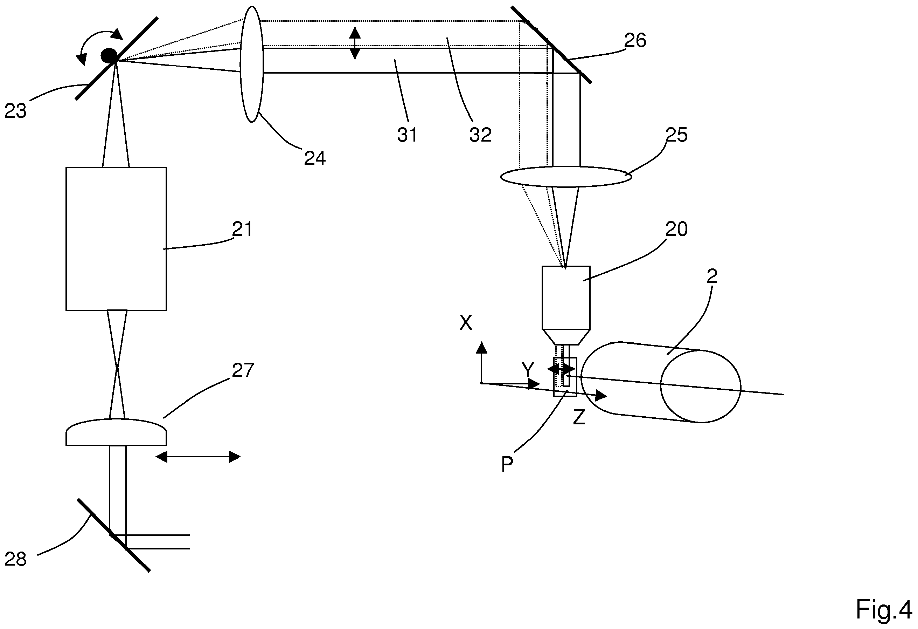

Die Wirkung des zylinderoptischen Elements 27 in Kombination mit dem schnell schaltbaren Abtastspiegel 23 ist im Detail nochmals in Fig.4 dargestellt, wo allerdings die einzelnen Elemente der Beleuchtungseinrichtung nur skizzenhaft durch einzelne Statthalter dargestellt werden. Dabei wird deutlich, daß bei Verwendung eines zylinderoptischen Elements 27 allein bei der hier skizzierten Stellung des Beleuchtungszoomelements 21 nur ein Teil des Bildfeldes abgedeckt werden kann, so daß zur vollständigen Abdeckung der schnelle Abtastspiegel 23 verwendet werden muß. Ohne eine Auslenkung des schnellen Abtastspiegels 23 wird das Licht entlang des Strahlenbereichs 31, dessen Begrenzung hier gezeigt ist, in den Probenbereich P abgebildet. Mit einer von Null verschiedenen Auslenkung läßt sich das Licht entlang des Strahlenbereichs 32 in den Probenbereich P lenken. Durch die zusätzliche Abtastbewegung des Abtastspiegels 23 kann also noch eine homogene Ausleuchtung des Probenbereichs P erreicht werden. Verzichtet man allerdings auf die Verwendung des Abtastspiegels 23, so wird eine sehr schnelle, stroboskopartige Beleuchtung des ausgewählten Probenbereichs möglich, die sonst durch die dieser gegenüber langsame Bewegung des Abtastspiegels 23 verhindert worden wäre.

Im Beleuchtungsstrahlengang der Beleuchtungseinrichtung 19 in Fig.2 ist hier zusätzlich auch noch ein zweites astigmatisch wirkendes optisches Element, hier beispielhaft als zweites zylinderoptisches Element 33 ausgestaltet, angeordnet. Statt eines zylinderoptischen Elements 33 mit mindestens einer Zylinderlinse lassen sich auch astigmatisch wirkende Elemente mit Powell-Linsen verwenden. Auch bei diesem zweiten zylinderoptischen Element handelt es sich um ein optionales Element. Es dient zur Abbildung des schnellen Abtastspiegels 23 in eine Pupillenebene und zur Abbildung des Winkelabtastspiegels 28 in eine Beleuchtungsfokusebene. Ohne dieses zusätzliche zweite zylinderoptische Element 33, einem Korrekturglied, steht der schnelle Abtastspiegel 23 sowie ein eventuell an gleicher oder äquivalenter Steller im Beleuchtungsstrahlengang angeordneter schaltbarer Umschaltspiegel 34 - zur Lichtblattjustage und / oder zur Umlenkung des Beleuchtungslichts in einen zweiten Beleuchtungsstrahlengang zur Beleuchtung von zwei Seiten - nur annähernd in der Pupillenebene der Beleuchtungsoptik. Dies hat zur Folge, daß einer durch einen der beiden Spiegel 23 oder 34 erzeugten Ortsbewegung im Probenbereich P auch ein gewisser Anteil einer Winkelbewegung überlagert ist. Insbesondere für den Umlenkspiegel 34, der ggf. auch für die Justierung des Lichtblattes in Detektierungsrichtung zuständig ist, kann sich dies nachteilig auswirken, da hieraus je nach Stellung des Spiegels eine gegenüber der Detektierungsebene schräge Lage des Lichtblattes resultieren kann.

Da die Beleuchtung bei der Lichtblattmikroskopie jedoch inhärent astigmatische Eigenschaften aufweist, können diese Eigenschaften ausgenutzt werden, um eine exakte Pupillenabbildung beider Spiegel 23 und 34 zu erreichen. Das zylinderoptische Element 33 wirkt nur auf eine Achse und wird so ausgelegt und positioniert, daß der ebenfalls in dieser Achse wirksame Abtast- bzw. Umlenkspiegel in die Pupille abgebildet wird. Der Strahlengang ist außerdem so ausgelegt, daß auch der in der anderen Achse wirksame Spiegel, auf den das zylinderoptische Element 33 in seiner Wirkung keinen Einfluss hat, exakt abgebildet wird. Eine Überlagerung von Winkelanteilen bei einer Ortsverschiebung im Probenbereich P kann somit vermieden werden. Das zylinderoptische Element 33 kann außerdem so ausgelegt werden, daß der Winkelabtastspiegel 28 exakt in die Probenebene abgebildet wird. Somit wird im Probenbereich P eine Überlagerung der Winkelbewegung mit einer Ortsbewegung vermieden. Da die beiden Spiegel 23 und 34 sehr nahe beieinander angeordnet sind, ist das zylinderoptische Element 33 sehr langbrennweitig konfiguriert.

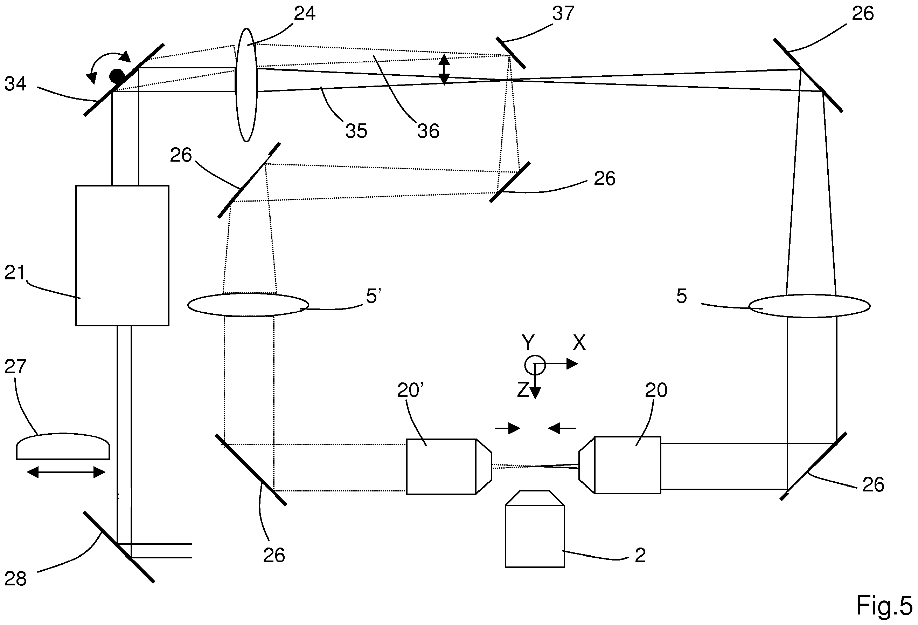

In Fig.5 ist ein Mikroskop, welches beispielsweise eine Beleuchtungseinrichtung 19 wie in Fig.2 beschrieben und eine Detektierungseinrichtung 1, wie beispielsweise in Fig.1, aufweisen kann, gezeigt, bei der die Beleuchtungseinrichtung 19 zusätzlich noch Mittel zur Umlenkung von Beleuchtungslicht in einen weiteren Beleuchtungsstrahlungsgang 36 und zur Erzeugung eines weiteren Lichtblatts mit entsprechenden Eigenschaften umfaßt, welches also in Richtung der Beleuchtungsachse X und in Richtung der Querachse Y annähernd flächig ausgedehnt ist. Im Beleuchtungsstrahlengang 35 und im weiteren Beleuchtungsstrahlengang 36 sind im wesentlichen identischen optischen Elementen angeordnet, beide Strahlengänge weisen auch die gleichen optischen Weglängen auf; das Lichtblatt und das weitere Lichtblatt sind so zueinander ausgerichtet, daß sie den Probenbereich P auf der gleichen Beleuchtungsachse X aus entgegengesetzten Richtungen beleuchten.

Außerdem umfaßt die Beleuchtungseinrichtung 19 noch Umschaltmittel zur Umschaltung des Beleuchtungslichts zwischen dem Beleuchtungsstrahlengang 35 und dem weiteren Beleuchtungsstrahlengang 36. Die Umschaltmittel umfassen ein schnell schaltbares Umschaltelement mit einer Schaltzeit von weniger als 10 ms, wobei eine vorgegebene Integrationszeit des Flächendetektors 4 und die Schaltzeit des Umschaltelements so aufeinander abgestimmt sind, daß der Probenbereich P während der Integrationszeit auf der Beleuchtungsachse X mindestens einmal aus jeder Richtung beleuchtet wird.

Das Umschaltelement ist hier als schnell schaltbarer Umschaltspiegel 34 ausgestaltet. Beispielsweise kann es sich bei dem Umschaltspiegel 34 um einen galvanometrisch angetriebenen Spiegel handeln. Der Umschaltspiegel 34 ist dabei in einer zur Beleuchtungspupillenebene konjugierten Ebene angeordnet. Auf diese Weise läßt sich eine schnell umschaltbare Zweistrahl-Beleuchtung erreichen. Je nach Stellung des Umschaltspiegels 34 wird das Licht entweder in den Beleuchtungsstrahlengang 35 oder - unter Zuhilfenahme eines Ablenkspiegels 37 - in den weiteren Beleuchtungsstrahlengang 36 gelenkt. Je nach Stellung des Umschaltspiegels 34 erreicht das Licht also entweder das Beleuchtungsobjektiv 20 oder das Beleuchtungsobjektiv 20'. Beide Strahlengänge sind mit gleichen optischen Elementen und gleichen optischen Weglängen gestaltet.

Anstelle eines Umschaltspiegels 34 lassen sich auch andere Umschaltelemente verwenden, beispielsweise akustooptische oder elektrooptische Umschaltelemente, die sowohl auf reflexiver als auch auf transmissiver Basis arbeiten können.

Wichtig ist die gegenüber der Integrationszeit des Flächendetektors - diese liegt in der Regel bei nicht mehr als 20 ms, da sich sonst Schwingungen negativ bemerkbar machen können - kurze Umschaltzeit, die so bemessen sein muß, daß der Probenbereich innerhalb der Integrationszeit mindestens einmal aus jeder Richtung beleuchtet wird. Auch Mehrfachabtastungen aus jeder Richtung sind denkbar, wenn die Umschaltzeit klein genug, beispielsweise weniger als 5 ms beträgt.

Zwar ist mit diesem Aufbau keine simultane Beleuchtung der Proben von beiden Seiten möglich, jedoch läßt sich aufgrund der Tatsache, daß der Umschaltspiegel 34 sehr kurze Schaltzeiten hat, eine quasi-simultane Beleuchtung erreichen, sofern dies notwendig sein sollte. Dazu muß nur innerhalb der Integrationszeit der Kamera die Beleuchtung einmal von dem einen auf den anderen Beleuchtungsstrahlengang umgestellt werden, so daß die Probe im Bild als von beiden Seiten gleichzeitig beleuchtet erscheint, obwohl tatsächlich eine sequentielle Beleuchtung erfolgte.

Effektiv wird also die Probe im Probenbereich P aus entgegengesetzten Richtungen entlang der Beleuchtungsachse X simultan beleuchtet, indem während der Integrationszeit des Flächendetektors 4 mindestens einmal ein Umschalten des Beleuchtungslichts vom Beleuchtungsstrahlengang in den weiteren Beleuchtungsstrahlengang erfolgt.

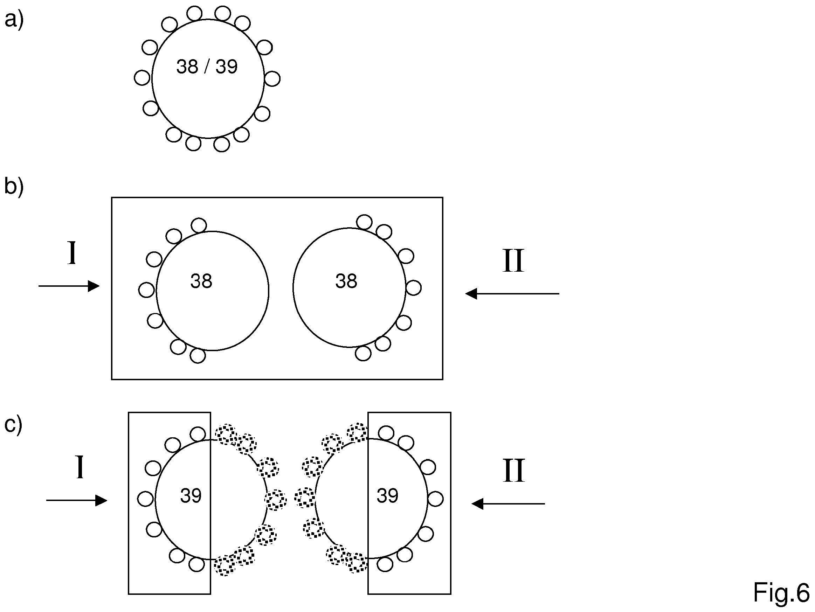

In Fig.6 beispielsweise ist eine Probe 38 gezeigt, bei der die sequentielle Beleuchtung nicht unbedingt erforderlich ist. Fig.6a zeigt das ideale Probenbild ohne Streuartefakte. Fig 6b zeigt die realen Bilder bei einseitiger Lichtblattbeleuchtung von links (I) und rechts (II). Die Probe 38 streut hier so stark, daß die jeweils mit einseitiger Beleuchtung erzeugten Bilder keine gemeinsame Strukturen zeigen; eine sinnvolle Erzeugung eines gemeinsamen Bildes ist in diesem Falle nicht oder nur schwer möglich. Dieser Fall tritt auch dann auf, wenn in der Mitte der Probe eine lichtblockierende Umgebung besteht, die im wesentlich intransparent ist. Dies ist zum Beispiel teilweise bei Zebrafischembryos der Fall, wo der Dottersack des Embryos das Licht blockiert. Aufgrund eines möglichen Geschwindigkeitsgewinns resultierend aus einer schnelleren Bildaufnahme und einer wegfallenden anschließenden Bildverarbeitung kann hier eine simultane Beleuchtung von beiden Seiten sinnvoll sein. Mit Hilfe des vorangehend beschriebenen schnellen Umschaltspiegels 34 ist zwar keine echte simultane Beleuchtung möglich, jedoch eine quasi-simultane Aufnahme, die effektiv einer simultanen Beleuchtung entspricht. Es wird hier dann während der Integrationszeit der Kamera eine schnelle Schaltung vorgenommen, die für den Anwender im Endbild quasi nicht erkennbar ist.

Jedoch werden andererseits aufgrund der Tatsache, daß keine echte simultane Beleuchtung der Probe möglich ist, in einigen anderen Proben auftretende Nachteile vermieden. Eine solche Probe ist in Fig.6 durch Probe 39 ist dargestellt, es kann sich zum Beispiel um einen Zellhaufen handeln. Fig 6a zeigt das ideale Probenbild mit scharfen Strukturen über den gesamten Probenbereich. Fig 6c zeigt die realen Bilder bei einseitiger Lichtblattbeleuchtung von links (I) und rechts (II). Die Streuung ist hier so ausgeprägt, daß bei einer einseitigen Beleuchtung alle Teile der Probe sichtbar bleiben, aber ein Qualitätsverlust von links nach rechts bzw. von rechts nach links zu bemerken ist. Eine simultane Zweistrahlbeleuchtung ist hier nicht angebracht, da der Qualitätsverlust möglichst vermieden werden soll. Sinnvoller ist eine sequentielle Beleuchtung. Die sequentielle Beleuchtung muß allerdings sehr schnell erfolgen, so dass bei Aufnahme eines Bildstapels in der Detektierungsrichtung Z die Möglichkeit besteht, jede Ebene einzeln von beiden Seiten zu beleuchten. Während Spiegelschaltungen mit Motoren zu lange Umschaltzeiten aufweisen und zudem Vibrationen auf den Spiegel übertragen werden können, was die Qualität herabsetzt, lassen sich die notwendigen Schaltzeiten von weniger als 10ms mit Hilfe von schnellen galvanometrisch angetriebenen Spiegeln ohne weiteres erreichen.

Der in Fig.5 dargestellte Aufbau hat außerdem den Vorteil, daß der Umschaltspiegel 34 in einer Pupillenebene angeordnet ist und daher für die Umschaltung der durch die Auslenkung des Umschaltspiegels 34 und des Abtastobjektivs 24 erzeugte Ortsversatz ausgenutzt wird. Andererseits sind natürlich auch Aufbauten denkbar, in denen für die Schaltung direkt der Winkelversatz ausgenutzt wird. Ein weiterer Vorteil des gezeigten Aufbaus besteht auch darin, daß der Umschaltspiegel 34 gleichzeitig auch durch einen geringfügigen Versatz zur Lichtblattjustage in der Detektierungsrichtung Z herangezogen werden kann.

Die in Fig. 5 gezeigte die Beleuchtungseinrichtung kann auch nicht dargestellte Lichtblatterzeugungsmittel zur Erzeugung eines rotationssymmetrischen Lichtstrahls - beispielsweise mittels eines Abtastspiegels 23 und des Abtastobjektivs 24 - zur lichtblattförmigen Abtastung des Probenbereichs entlang der Querachse umfassen, sowie optional - beispielsweise in Form eines Winkelabtastspiegels 28 - Winkelabtastmittel, mittels der ein Winkel, den das Lichtblatt mit der Beleuchtungsachse einschließt, variierbar ist.

Dabei kann es von Vorteil sein, daß die Beleuchtungseinrichtung ein im Beleuchtungsstrahlengang oder im weiteren Beleuchtungsstrahlengang angeordnetes, astigmatisch wirkendes optisches Element, bevorzugt ein zylinderoptisches Element zur korrekten Abbildung des Umschaltspiegels oder des Abtastspiegels in eine Pupillenebene umfaßt. Während der eine der beiden Spiegel korrekt in die Pupillenebene abgebildet wird, ist die Abbildung des anderen Spiegels ohne ein solches zusätzliches astigmatisch wirkendes Element nicht korrekt, es handelt sich als um eine Korrekturoptik zur korrekten Abbildung beider Spiegel.

Eine interessante Anwendungsmöglichkeit ergibt sich auch, wenn der Flächendetektor über getrennt auslesbare Bereiche von Pixeln verfügt, für die unterschiedliche Integrationszeiten vorgegeben werden können, wie es beispielsweise bei modernen Flächendetektoren auf CMOS-Basis der Fall ist. Hier kann die Schaltzeit des Umschaltelements zusätzlich auch mit diesen unterschiedlichen Integrationszeiten synchronisiert werden. Dies läßt sich auch mit der in Fig. 4 dargestellten Ausführung kombinieren.

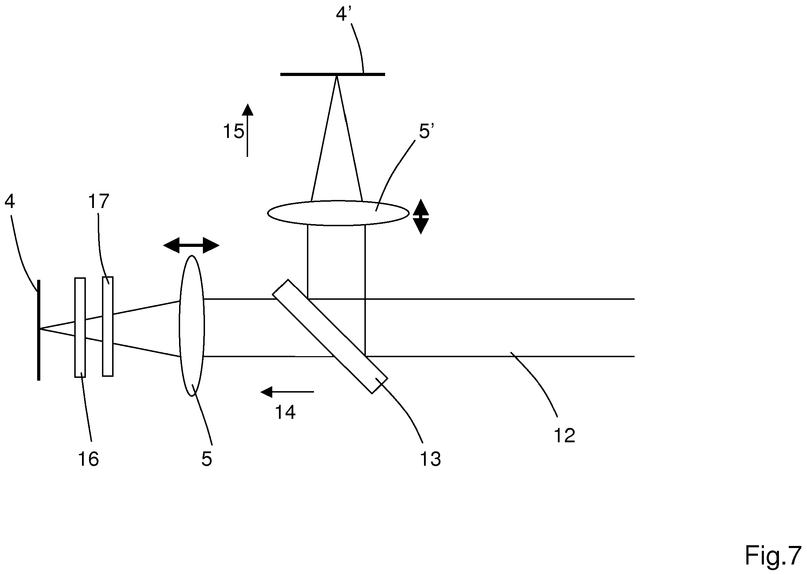

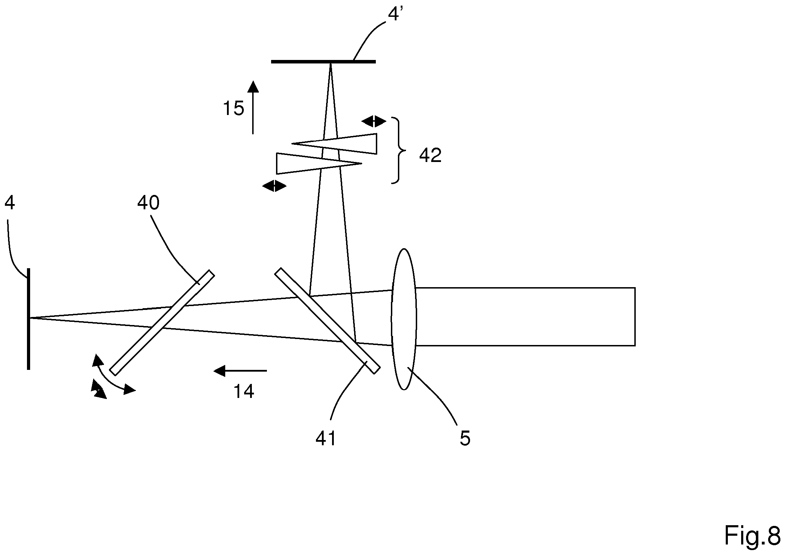

In den Fig.7 und 8 sind Aufteilungsmittel zur Aufteilung des Detektierungsstrahlengangs in zwei Teilstrahlengänge 14 und 15 dargestellt, wobei in den Teilstrahlengängen 14 und 15 jeweils ein ortsauflösender Flächendetektor 4 bzw. 4' angeordnet ist, auf den das zu detektierende Licht abgebildet wird, und wobei die Aufteilungsmittel mindestens einen dichroitischen Strahlteiler 13 bzw. 40 umfassen. Beide Aufbauten lassen sich in eine Detektierungseinrichtung 1, wie sie beispielsweise in Fig.1 dargestellt ist, und welche mit einer Beleuchtungseinrichtung 19, wie sie in Fig.2 dargestellt ist, kombiniert werden kann, einfügen.

Durch die Aufteilung des Detektierungsstrahlengangs in zwei Teilstrahlengänge 14 und 15 läßt sich bei gleichzeitiger Unterdrückung des Anregungslichts mit Emissionsfiltern und Bandpässen für beide Teilstrahlengänge 14, 15 ein jeweils unterschiedlicher Spektralbereich detektieren. Dadurch ist es möglich, gleichzeitig mehrere Farbbereiche aufzunehmen, wenn beispielsweise die Probe mit verschiedenfarbigen Fluorophoren markiert ist. Falls mehr als zwei Farben verwendet werden, lassen sich auch sequentielle Aufnahmen im sogenannten Multi-Track-Modus unter Wechsel der Anregungslinien und eventuell auch der dichroitischen Strahlteiler, Bandpässe oder Emissionsfilter durchführen.

Die ortsauflösenden Flächendetektoren 4 und 4' können CCDs, EMCCDs, CMOS-Chips oder ähnliches sein, die in Anwenderkameras integriert sein können. Zur Anbringung solcher Kameras ist zweckmäßig eine nicht gezeigte Standard-C-Mount-Schnittstelle vorgesehen, um unterschiedliche Kameratypen anzuschließen. Die C-Mount-Toleranzen von lateral 0,2mm und die Orientierung, d.h. die Bildrotation der Kamera, können beispielsweise durch Stellschrauben ausgeglichen werden.

Bei der in Fig.7 gezeigten Ausführung ist der dichroitische Strahlenteiler 13 im Strahlengang im nah-unendlichen Raum 12 bzgl. der ortsauflösenden Flächendetektoren 4 und 4' angeordnet. Der dichroitische Strahlteiler 13 weist eine Dicke von mindestens 3, bevorzugt von mindestens 4mm auf. Auf diese Weise lassen sich die im Stand der Technik bekannten Bildartefakte, die durch Oberflächenspannungen am Strahlteiler hervorgerufen werden, insbesondere Defokussierung und Astigmatismus, beseitigen. In jedem der beiden Teilstrahlengänge 14 und 15 sind optische Abbildungselemente 5 bzw. 5' zur Abbildung des zu detektierenden Lichts auf den jeweiligen Flächendetektor 4, 4' angeordnet.

Die optischen Abbildungselemente 5 und 5' können als Option - wie hier dargestellt - in den jeweiligen Teilstrahlengängen 14 und 15 verschiebbar angeordnet sein, so daß die Fokussierung auf den jeweiligen Flächendetektor einstellbar ist. Dies kann beispielsweise dann vorteilhaft sein, wenn ein Farblängsfehler der Detektierungsoptik korrigiert werden muß. Da nur einzelne spektrale Bereiche bzw. Wellenlängen detektiert werden, ist eine sehr genaue Anpassung an die jeweils zu detektierende Wellenlänge möglich. Sind zusätzlich noch andere Mittel zur Fokusverschiebung, wie beispielsweise ein Detektierungszoomelement 6 vorhanden, so reicht es aus, in einem der beiden Teilstrahlengänge ein verschiebbares Abbildungselement anzuordnen, das andere kann dann fix sein.

In mindestens einem der beiden Teilstrahlengänge 14 und 15 ist außerdem mindestens eine Wackelplatte zur Erzeugung eines Strahlversatzes entlang zweier orthogonaler Richtungen quer zur Detektierungsachse Z angeordnet. Während bei der Verwendung nur einer Wackelplatte diese in den zwei orthogonalen Richtungen gestellt werden muß, können mit äquivalenter Wirkung auch zwei Wackelplatten verwendet werden. Mit der einen der beiden Platten wird dann der Strahlversatz in der einen Richtung eingestellt, mit der anderen der Strahlversatz in der dazu orthogonalen Richtung. In Fig. 7 sind für den einen der beiden Strahlengänge, den Transmissionsstrahlengang 14, zwei Wackelplatten 16 und 17 zur Erzeugung eines Strahlversatzes entlang zweier zueinander orthogonalen Richtungen quer zur Detektierungsachse Z angeordnet.

Die Wackelplatte 16 kann beispielsweise zur Erzeugung eines Strahlversatzes in X-Richtung, die Wackelplatte 17 zur Erzeugung eines Strahlversatzes in Y-Richtung verwendet werden. Im anderen Teilstrahlengang 15, dem Reflexionsstrahlengang, werden keine Wackelplatten benötigt. Auf diese Weise läßt sich eine Bildüberlagerung der beiden Detektierungskanäle herstellen, die auch automatisch erfolgen kann, sofern zuvor eine Kalibrierung mit Hilfe eines in eine Zwischenbildebene des Detektierungsstrahlengangs zuschaltbar angeordneten Kalibrierungsobjektivs oder einer entsprechenden Transmissionsstrukur, beispielsweise einer Transmissionsgitterstruktur 7 vorgenommen worden ist. Ist der Strahlversatz bestimmt, so können die Bilder von beiden Flächendetektoren 4, 4' ohne weiteres überlagert werden und einem Benutzer wird nur die Überlagerung gezeigt.

Eine Fokusverstellung läßt sich nicht nur mittel einer Verschiebung der optischen Abbildungelemente 5, 5' erreichen, sondern auch durch die Anordnung einer Keilstruktur 41 aus zwei in den Strahlengang ragenden, quer zur Strahlrichtung verschiebbaren optischen Keilen. Es handelt sich hierbei und zwei einfache Glaskeile, die aufeinander zu bzw. von einander weg bewegt werden können. Auf diese Weise wird ein variabler, zusätzlicher Glasweg in den Strahlengang ein- bzw. aus diesem herausgebracht, welcher eine entsprechende Verschiebung der Fokusebene des optischen Abbildungselementes 5 bzw. 5' bewirkt. Die Keilstruktur 41 ist dabei zwischen dem jeweiligen optischen Abbildungselement 5 oder 5' und dem entsprechenden Flächendetektor 4 bzw. 4' im divergenten Teil des Strahlengangs angeordnet, sie ist jedoch in Fig.7 nicht dargestellt.

Eine weitere Ausführung für die Zweikanaldetektierung ist in Fig.8 dargestellt. Hier befindet sich ein dichroitischer Strahlteiler 40 mit beliebiger Dicke im divergenten Teil des Abbildungsstrahlenganges, also zwischen dem optischen Abbildungselement 5 und den Flächendetektoren 4 und 4'. In einem der beiden Teilstrahlengänge, nämlich dem Teilstrahlengang 14 für das von dem Strahlteiler transmittierte Licht ist dann außerdem zwischen dem Flächendetektor 4 und dem Strahlteiler 40 eine Glasplatte 42 angeordnet, die mit dem Strahlteiler 40 einen Winkel von annähernd 90° einschließt. Diese Glasplatte 42 weist die gleiche Dicke wie der Strahlteiler 40 auf, auf diese Weise wird der durch den Strahlteiler 40 in Transmissionsrichtung verursachte Astigmatismus wieder korrigiert.

In einer vorteilhaften Ausgestaltung kann die Glasplatte 42 gleichzeitig als Wackelplatte zur Einstellung des Versatzes zwischen den beiden Kamerakanälen verwendet werden. Die Glasplatte 42 ist nur im Transmissionsstrahlengang, d.h. in dem Teilstrahlengang 14, der das vom Strahlteiler 40 transmittierte Licht auf den Flächendetektor 4 abbildet, notwendig. Im reflektierten Teilstrahlengang 15 in Fig.8 ist die oben schon erwähnte Keilstruktur 41 angeordnet, mit der durch Verschieben der beiden Glaskeile aufeinander zu bzw. voneinander weg - angedeutet durch die Doppelpfeile - die Fokusebene des optischen Abbildungselements 5 verschoben werden kann. Eine solche Keilstruktur 41 kann auch im Transmissionsstrahlengang angeordnet werden, in diesem Fall kann beispielsweise auf eine Verschiebung des optischen Abbildungselementes 5 verzichtet werden, dies muß nicht verschiebbar ausgestaltet sein. Grundsätzlich reicht es aber aus, das optische Abbildungselement 5 verschiebbar zu gestalten und in einen der beiden Strahlengänge eine Keilstruktur 41 einzubringen. Während beispielsweise dann, wie in Fig.8 gezeigten Beispiel, die Fokusebene für den Transmissionsteilstrahlengang nur mit Hilfe des optischen Abbildungselementes 5 variiert wird, kann die Fokusebene für den Reflexionsstrahlengang noch mit Hilfe der Keilstruktur 41 weiter angepaßt werden.

Es versteht sich, daß die vorstehend genannten Merkmale nicht nur in den angegebenen Kombinationen, sondern auch in anderen Kombinationen oder in Alleinstellung einsetzbar sind, ohne den Rahmen der vorliegenden Erfindung zu verlassen. Die vorangehend beschriebenen einzelnen Elemente lassen sich sämtlich miteinander kombinieren, auch die Verwendung einzelner Elemente unter Verzicht auf andere gezeigte Elemente, beispielsweise ist der Verzicht auf eine Zoom-Einrichtung bei gleichzeitiger Verwendung zweier Detektierungsteilstrahlengänge ist möglich. Auch die Kombination einer Beleuchtung aus zwei Richtungen kann mit einer Detektierung in zwei Kanälen kombiniert werden, dies auch mit den Beleuchtungs- und Detektierungszoomelementen bei gleichzeitiger Innenfokussierung. Insgesamt weisen die vorangehend beschriebenen Anordnungen wesentliche Verbesserungen gegenüber den im Stand der Technik bekannten Anordnungen auf.

### Bezugszeichenliste

- 1: Detektierungseinrichtung
- 2: Detektierungsobjektiv
- 3: Tubuslinseneinheit
- 4,4': Flächendetektor
- 5, 5': Abbildungselement
- 6: Detektierungszoomelement
- 7: Transmissionsgitterstruktur
- 8: Tubuslinse
- 9,10: Umlenkspiegel
- 11: Strahleinkoppler
- 12: Nah-Unendlich-Bereich
- 13: Strahlteiler
- 14, 15: Teilstrahlengang
- 16, 17: Wackelplatte
- 18: Emissionsfilter
- 19: Beleuchtungseinrichtung
- 20: Beleuchtungsobjektiv
- 21: Beleuchtungszoomelement
- 22: Teleskopwechsler
- 23: Abtastspiegel
- 24: Abtastobjektiv
- 25: Tubuslinsenelement
- 26: Spiegel
- 27: zylinderoptisches Element
- 28: Winkelabtastspiegel
- 29,30: Strahlengang
- 31, 32: Strahlenbereiche
- 33: zylinderoptisches Element
- 34: Umschaltspiegel
- 35: Beleuchtungsstrahlengang
- 36: weiterer Beleuchtungsstrahlengang
- 37: Ablenkspiegel
- 38, 39: Probe
- 40: Strahlteiler
- 41: Keilstruktur
- 42: Glasplatte

## Patentansprüche

1. Mikroskop, umfassend
- eine Beleuchtungseinrichtung (19), mit der mittels eines Abtastspiegels (23) ein Lichtblatt zur Beleuchtung eines Probenbereichs (P) erzeugt wird, welches in Richtung einer Beleuchtungsachse (X) eines Beleuchtungsstrahlenganges (35) und in Richtung einer Querachse (Y), welche quer zur Beleuchtungsachse (X) liegt, annähernd flächig ausgedehnt ist,
- eine Detektierungseinrichtung (1), mit der Licht detektiert wird, welches entlang einer Detektierungsachse (Z) eines Detektierungsstrahlengangs aus dem Probenbereich (P) abgestrahlt wird, wobei Beleuchtungsachse (X) und Detektierungsachse (Z), sowie Querachse (Y) und Detektierungsachse (Z) in einem von Null verschiedenen Winkel aufeinander stehen,
- die Detektierungseinrichtung (1) umfassend im Detektierungsstrahlengang ein Detektierungsobjektiv (2), wobei
- die Beleuchtungseinrichtung (19) Mittel zur Umlenkung von Beleuchtungslicht in einen weiteren Beleuchtungsstrahlengang (36) und zur Erzeugung eines weiteren Lichtblatts umfasst, wobei das weitere Lichtblatt in Richtung der Beleuchtungsachse (X) und in Richtung der Querachse (Y) annähernd flächig ausgedehnt ist, wobei der Beleuchtungsstrahlengang (35) und der weitere Beleuchtungsstrahlengang (36) aus im wesentlichen identischen optischen Elementen aufgebaut sind und die gleichen optischen Weglängen aufweisen, und wobei das Lichtblatt und das weitere Lichtblatt so zueinander ausgerichtet sind, dass sie den Probenbereich (P) auf der gleichen Beleuchtungsachse (X) aus entgegengesetzten Richtungen beleuchten,
- wobei die Mittel zur Umlenkung von Beleuchtungslicht ein Umschaltelement umfassen, welches das Beleuchtungslicht zwischen dem Beleuchtungsstrahlengang (35) und dem weiteren Beleuchtungsstrahlengang (36) umschaltet und / oder das Lichtblatt zum Zwecke der Justierung in Richtung der Detektierungsachse verschiebt,
- wobei das Umschaltelement im Beleuchtungsstrahlengang in unmittelbarer Nähe zum Abtastspiegel angeordnet ist oder an äquivalenter Stelle im Beleuchtungsstrahlengang wie der Abtastspiegel angeordnet ist.

2. Mikroskop nach Anspruch 1, **dadurch gekennzeichnet, daß** das Umschaltelement als weiterer Abtastspiegel ausgestaltet ist.

3. Mikroskop nach Anspruch 2, **dadurch gekennzeichnet, daß** der weitere Abtastspiegel in unmittelbarer Nähe zum Abtastspiegel (23) plaziert ist.

4. Mikroskop nach einem der Ansprüche 1 bis 3, **dadurch gekennzeichnet, daß** das Umschaltelement als Umschaltspiegel (34), akustooptisches oder elektrooptisches Umschaltelement ausgestaltet ist.

5. Mikroskop nach einem der Ansprüche 1 bis 4, **dadurch gekennzeichnet, daß** dem Abtastspiegel (23) ein in den Beleuchtungsstrahlengang einbringbares astigmatisch wirkendes Element mit mindestens einer astigmatischen Linse zur Erzeugung eines statischen Lichtblatts vorgeordnet ist.

6. Mikroskop nach einem der Ansprüche 1 bis 5, bei dem die Detektierungseinrichtung (1) außerdem einen ortsauflösenden Flächendetektor (4) umfasst, **dadurch gekennzeichnet, daß** eine Umschaltzeit des Umschaltelements so bemessen ist, daß der Probenbereich (P) innerhalb der Integrationszeit des Flächendetektors (4) zur Detektierung von aus dem Probenbereich (P) abgestrahlten Licht mindestens einmal aus jeder Richtung auf der Beleuchtungsachse (X) beleuchtbar ist.

## Claims

1. Microscope, comprising
- an illumination device (19), with which a light sheet for illuminating a sample region (P) is generated by means of a scanning mirror (23), said light sheet having an approximately two-dimensional extent in the direction of an illumination axis (X) of an illumination beam path (35) and in the direction of a transverse axis (Y), which is transverse to the illumination axis (X),
- a detection device (1), with which light is detected that is emitted from the sample region (P) along a detection axis (Z) of a detection beam path, wherein the illumination axis (X) and the detection axis (Z) and also the transverse axis (Y) and the detection axis (Z) enclose a non-zero angle,
- with the detection device (1) comprising a detection objective (2) in the detection beam path, wherein
- the illumination device (19) comprises means for deflecting illumination light into a further illumination beam path (36) and for generating a further light sheet, wherein the further light sheet has an approximately two-dimensional extent in the direction of the illumination axis (X) and in the direction of the transverse axis (Y), wherein the illumination beam path (35) and the further illumination beam path (36) are made up of substantially identical optical elements and have the same optical path lengths, and wherein the light sheet and the further light sheet are aligned relative to one another such that they illuminate the sample region (P) on the same illumination axis (X) from opposite directions,
- wherein the means for deflecting illumination light comprise a switchover element, which switches the illumination light between the illumination beam path (35) and the further illumination beam path (36) and/or shifts the light sheet for the purpose of an adjustment in the direction of the detection axis,
- wherein the switchover element in the illumination beam path is arranged in the immediate vicinity of the scanning mirror or is arranged at an equivalent point in the illumination beam path to the scanning mirror.

2. Microscope according to Claim 1, **characterized in that** the switchover element is designed as a further scanning mirror.

3. Microscope according to Claim 2, **characterized in that** the further scanning mirror is disposed in the immediate vicinity of the scanning mirror (23).

4. Microscope according to one of Claims 1 to 3, **characterized in that** the switchover element is designed as a switchover mirror (34) or an acousto-optic or electro-optic switchover element.

5. Microscope according to one of Claims 1 to 4, **characterized in that** an astigmatically acting element, which is introducible into the illumination beam path and has at least one astigmatic lens for generating a static light sheet, is arranged upstream of the scanning mirror (23) .

6. Microscope according to one of Claims 1 to 5, wherein the detection device (1) additionally comprises a spatially resolving area detector (4), **characterized in that** a switchover time of the switchover element is gauged such that the sample region (P) is illuminable at least once from every direction on the illumination axis (X) within the integration time of the area detector (4) for detecting light emitted from the sample region (P).

## Revendications

1. Microscope, comprenant
- un dispositif d'éclairage (19) permettant de générer au moyen d'un miroir de balayage (23) une nappe de lumière destinée à éclairer une zone d'échantillon (P) qui s'étend de manière approximativement bidimensionnelle dans la direction d'un axe d'éclairage (X) d'un trajet de faisceau d'éclairage (35) et dans la direction d'un axe transversal (Y) qui est transversal à l'axe d'éclairage (X),
- un dispositif de détection (1) permettant de détecter une lumière qui est rayonnée le long d'un axe de détection (Z) d'un trajet de faisceau de détection depuis la zone d'échantillon (P), l'axe d'éclairage (X) et l'axe de détection (Z), ainsi que l'axe transversal (Y) et l'axe de détection (Z) formant un angle différent de zéro,
- le dispositif de détection (1) comprenant un objectif de détection (2) dans le trajet de faisceau de détection,
- le dispositif d'éclairage (19) comprenant des moyens destinés à dévier la lumière d'éclairage dans un autre trajet de faisceau d'éclairage (36) et à générer une autre nappe de lumière, la nappe de lumière s'étendant de manière approximativement bidimensionnelle dans la direction de l'axe d'éclairage (X) et dans la direction de l'axe transversal (Y), le trajet de faisceau d'éclairage (35) et l'autre trajet de faisceau d'éclairage (36) étant construits à partir d'éléments optiques sensiblement identiques et ayant les mêmes longueurs de trajet optique, et la nappe de lumière et l'autre nappe de lumière étant orientées l'une par rapport à l'autre de manière à éclairer la zone d'échantillon (P) sur le même axe d'éclairage (X) depuis des directions opposées,
- les moyens destinés à dévier la lumière d'éclairage comprenant un élément de commutation qui commute la lumière d'éclairage entre le trajet de faisceau d'éclairage (35) et l'autre trajet de faisceau d'éclairage (36) et/ou déplace la nappe de lumière dans la direction de l'axe de détection à des fins d'ajustement,
- l'élément de commutation dans le trajet de faisceau d'éclairage est disposé à proximité immédiate du miroir de balayage ou est disposé à un emplacement du trajet de faisceau d'éclairage équivalent à celui du miroir de balayage.

2. Microscope selon la revendication 1, **caractérisé en ce que** l'élément de commutation est réalisé sous la forme d'un autre miroir de balayage.

3. Microscope selon la revendication 2, **caractérisé en ce que** l'autre miroir de balayage est placé à proximité immédiate du miroir de balayage (23).

4. Microscope selon l'une des revendications 1 à 3, **caractérisé en ce que** l'élément de commutation est réalisé sous la forme d'un miroir de commutation (34), d'un élément de commutation acousto-optique ou électro-optique.

5. Microscope selon l'une des revendications 1 à 4, **caractérisé en ce que** le miroir de balayage (23) est précédé d'un élément agissant de manière astigmatique qui peut être introduit dans le trajet de faisceau d'éclairage et qui comporte au moins une lentille astigmatique destinée à générer une nappe de lumière statique.

6. Microscope selon l'une des revendications 1 à 5, dans lequel le dispositif de détection (1) comprend en outre un détecteur de surface à résolution locale (4), **caractérisé en ce qu'**un temps de commutation de l'élément de commutation est dimensionné de manière à ce que, pendant le temps d'intégration du détecteur de surface (4), la zone d'échantillon (P) puisse être éclairée au moins une fois depuis chaque direction sur l'axe d'éclairage (X) pour détecter la lumière rayonnée par la zone d'échantillon (P).
